# EUROPÄISCHE PATENTSCHRIFT

(11) **EP 3 176 042 B1**
(45) Veröffentlichungstag und Bekanntmachung des Hinweises auf die Patenterteilung: **20.01.2021**
(21) Anmeldenummer: 16201954.1
(22) Anmeldetag: 02.12.2016
(51) Int. Cl.: B60T 8/17, B60T 8/1755

(54) **STABILISIERUNGSTECHNIK FÜR FAHRZEUGANHÄNGER**
STABILIZATION TECHNIQUE FOR VEHICLE TRAILERS
TECHNIQUE DE STABILISATION POUR REMORQUES DE VÉHICULE

(30) Priorität: 03.12.2015 DE 202015106595 U; 23.02.2016 DE 202016100947 U
(43) Veröffentlichungstag der Anmeldung: 07.06.2017
(73) Patentinhaber: AL-KO Technology Austria GmbH, 6284 Ramsau im Zillertal (AT)
(72) Erfinder: CZESCHNER, Daniel Andre, 87727 Babenhausen (DE); ECKLE, Volker, 89183 Holzkirch (DE)
(74) Vertreter: Ernicke, Klaus Stefan

(56) Entgegenhaltungen:
- EP-A1- 2 174 847
- WO-A1-2004/109326
- DE-A1-102008 041 687
- US-A1- 2015 081 184

## Beschreibung

Die Erfindung betrifft eine Technik zur Stabilisierung von Fahrzeuganhängern mittels eines Bremsaktuators zur überlagernden mechanischen Betätigung mindestens einer Anhängerbremse. Die Technik umfasst zumindest ein Stabilisierungssystem und ein Stabilisierungsverfahren. Die Erfindung betrifft weiterhin eine Erfassungstechnik zur Erfassung der (momentanen) Masse und/oder des (momentanen) Gewichts eines Fahrzeuganhängers und/oder seiner Beladung. Die Erfassungstechnik kann in Kombination mit der Stabilisierungstechnik verwendet werden, die eine überlagernde mechanische Betätigung einer Anhängerbremse vorsieht. Sie kann alternativ für sich allein oder in Kombination mit einer Stabilisierungstechnik verwendet werden, die auf einer anderen Art der Bremsbetätigung basiert. Die Erfindung betrifft ferner eine Radlenkerachse mit einer lasterfassenden Sensorik für einen Fahrzeuganhänger.

In der Praxis sind verschiedene Bremssysteme für Fahrzeuganhänger bekannt, darunter elektronische Bremsen und mechanische Bremsen mit diversen Betätigungsweisen. Elektronische Bremsen bieten eine hohe Beeinflussbarkeit der Bremseingriffe und können bzw. müssen teilweise mit einem Bremssystem eines Zugfahrzeugs abgestimmt sein. Sie bedürfen allerdings einer ständigen Energieversorgung. Diese wird in der Regel vom Zugfahrzeug abgeleitet. Es bedarf also einer Anpassung zwischen Zugfahrzeug und Fahrzeuganhänger, was die Verwendbarkeit der elektrischen Bremssysteme und damit deren Akzeptanz im Markt einschränkt.

Aus DE 10 2008 041 687 A1 ist ein Auflauf-Bremssystem für PKW-Anhänger mit einer Bremsanlage und einer Auflaufeinrichtung bekannt, bei der eine zusätzliche, zur Ansteuerung über die Auflaufeinrichtung überlagerte Ansteuerung der Bremsanlage vorgesehen ist. Diese wird durch elektrische Stellglieder in Form von Aktuatoren erzeugt, die an den Radbremsen auf elektromechanische Betätigungseinrichtungen einwirken.

US 2015/081184 A1 offenbart ein Steuerverfahren und eine Steuervorrichtung für ein Anhängerbremssystem, das elektronische Bremsen aufweisen kann. Mittels eines Beschleunigungssensors und eines Neigungssensors soll eine absolute Entschleunigung des Anhängers erfasst werden, indem aus einer sensorisch erfassten LängsBeschleunigung ein Anteil eliminiert wird, der aus einer Gravitationsbeschleunigung gemäß der momentanen Neigung des Anhängers hervorgeht.

Aus WO 2004/109326 A1 ist eine Technik zur Erfassung eines Knickwinkels zwischen einem Sattelschlepper und einem Auflieger bekannt.

EP 2 174 847 A1 offenbart ein Verfahren zur Ansteuerung eines elektronischen Stabilitätsprogramms von Fahrzeuganhängern.

Mechanische Bremssysteme, d.h. Radbremsen für Fahrzeuganhänger mit mechanischer Betätigung, haben den Vorteil, dass sie unabhängig vom Zugfahrzeug betrieben werden und eine besonders hohe Ausfallsicherheit aufweisen. Fahrzeuganhänger mit einem mechanischen Bremssystem können in der Regel mit beliebigen Zugfahrzeugen verbunden werden. Ferner benötigen mechanisch betätigte Bremsen für die wichtigsten Basis-Funktionen wie Auflaufbremsen, Rückmatik-Betrieb (Vermeidung der Auflaufbremsung bei Rückwärtsfahrten) und Bremsnachstellung keine separate Energieversorgung. Die Energie zur Basis-Betätigung der mechanischen Bremse wird vielmehr aus der Bewegung bzw. Bewegungsenergie des Fahrzeuganhängers abgeleitet, insbesondere durch eine Auflaufeinrichtung.

Die vorliegende Stabilisierungstechnik bildet bevorzugt eine Erweiterung für ein solches mechanisches Bremssystem, d.h. insbesondere für zwei oder mehr Radbremsen, die an den nicht angetriebenen Rädern eines Fahrzeuganhängers angeordnet sind, und die mechanisch betätigt werden, insbesondere durch eine Basis-Betätigung in Form einer Zugkraft oder Druckkraft, die über ein mechanisches Kraftleitungsmittel wie Bremszüge oder Bremsstangen an die Betätigungselemente der Radbremsen geleitet werden. Das Kraftleitungsmittel kann alternativ eine Hydraulikleitung sein.

Teile der offenbarten Stabilisierungstechnik, insbesondere die Art der Beeinflussung eines Bremseingriffs in Abhängigkeit von einer erfassten Masse und/oder einem erfassten Gewicht, und die offenbarte Erfassungstechnik zur Bestimmung einer (momentanen) Masse und/oder eines (momentanen) Gewichts des Fahrzeuganhängers oder seiner Beladung können auch mit einer Stabilisierungstechnik verwendet werden, die eine Betätigung von Radbremsen ohne mechanische Überlagerung vorsieht. Soweit nachfolgend Sensoren oder sonstige Messmittel offenbart sind, durch die direkt oder indirekt eine Masse und/oder ein Gewicht des Fahrzeuganhängers und/oder seiner Beladung feststellbar sind, können diese als Bestandteil einer Erfassungseinrichtung aufgefasst werden sowie in einem Erfassungsverfahren abgefragt und ausgewertet werden. Die Erfassungseinrichtung kann eine separate Steuerung aufweisen und/oder mit der Steuerung der Stabilisierungseinrichtung verbunden sein.

Die Stabilisierungstechnik bewirkt in einer bevorzugten Ausführung eine überlagerte Aktuierung der Radbremsen zur Vermeidung oder Begrenzung instabiler Fahrzustände, wobei die Aktuierung durch mechanische Betätigungskräfte bzw. mechanische Stellbewegungen bewirkt wird, die von einem Bremsaktuator in Überlagerung zu den Basis-Kräften bzw. Basis-Stellbewegungen aufgebracht wird. Durch die überlagerte Aktuierung werden eine oder mehrere Radbremsen des Fahrzeuganhängers in kontrollierter Weise aktiviert. Ein geeignetes Bremsen an den Rädern des Fahrzeuganhängers bewirkt in Kombination mit den Kräften, die im Bereich der Anhängekupplung zwischen dem Zugfahrzeug und dem Fahrzeuganhänger übertragen werden, insbesondere den Zugkräften in Längsrichtung des Fahrzeuganhängers, eine Stabilisierung der Bewegung.

Die Basis-Betätigung der Radbremsen umfasst bevorzugt eine Betätigung durch eine Auflaufbremseinrichtung, die weiterhin bevorzugt im Bereich der Zugdeichsel und/oder der Anhängekupplung des Fahrzeuganhängers angeordnet ist. Von der Auflaufbremseinrichtung wird eine Basis-Betätigungskraft oder Basis-Stellbewegung erzeugt, die über Bremszüge oder Bremsgestänge an die Radbremsen geleitet wird.

Aus der GB 2 362 693 ist ein Fahrzeuganhänger mit einer Auflauf-Bremseinrichtung zur mechanischen Basis-Betätigung der Radbremsen bekannt. Eine zusätzliche Regeleinrichtung ist zur Anpassung der Bremsleistungen von Zugfahrzeug und Fahrzeuganhänger vorgesehen. Diese Regeleinrichtung ermittelt eine Bremsleistung des Zugfahrzeugs und erzeugt eine überlagerte Betätigungskraft für die Radbremsen des Fahrzeuganhängers, damit die Bremskraft am Fahrzeuganhänger auf den Wert der Bremskraft des Zugfahrzeugs eingestellt werden kann. Der Bremsaktuator ist durch einen Stellzylinder gebildet, dessen Ausfahrbewegung durch einen Kompressor und eine Steuerblende eingestellt wird. Die Regeleinrichtung wirkt ausschließlich während einer Bremsung durch das Zugfahrzeug und einer daraus resultierenden Relativbewegung zwischen Zugfahrzeug und Fahrzeuganhänger.

Aus der DE 20 2004 008 160 U1 ist ein Fahrzeuganhänger mit einer Auflaufbremseinrichtung als Basis-Bremssystem und einer Schlingerbremse bekannt. Die Schlingerbremse weist einen Elektromotor und eine ausfahrbare Gewindespindel auf. Bei der Erkennung einer Schlingerbewegung des Fahrzeuganhängers wird der Elektromotor bestromt, um über die Gewindespindel eine Betätigungskraft bzw. eine Stellbewegung zur mechanischen Betätigung der Radbremsen zu erzeugen. Diese Stellbewegung bzw. Betätigungskraft der Schlingerbremse wird der Basis-Betätigung bzw. Basis-Stellbewegung der Auflaufbremse überlagert.

Die bisher bekannten Bremsaktuatoren zur Erzeugung einer überlagerten Betätigungskraft oder Stellbewegung für die mechanische Betätigung der Radbremsen greifen nach statischen Auslöseregeln ein, meist wenn bereits zu einem gewissen Grad ein problematisches Bewegungsverhalten vorliegt. Ferner arbeiten die bisher bekannten Stabilisierungssysteme nicht in allen Zuständen des Fahrzeuganhängers optimal.

Es ist Aufgabe der vorliegenden Erfindung, eine verbesserte Stabilisierungstechnik für Fahrzeuganhänger aufzuzeigen. Die Erfindung löst diese Aufgabe durch die Merkmale der eigenständigen Ansprüche.

Unter einem stabilen Fahrzustand wird ein Bewegungsverhalten des gezogenen Fahrzeuganhängers verstanden, das im Wesentlichen durch die Bewegung des Zugfahrzeugs vorgegeben ist bzw. dieser Bewegung folgt und bei dem die Anhängerräder im ständigen Kontakt mit der Fahrbahn bleiben.

Unter einem instabilen Fahrtzustand eines Fahrzeuganhängers wird ein Bewegungsverhalten des Fahrzeuganhängers verstanden, das wesentlich von der Bewegung des Zugfahrzugs abweicht bzw. dieser Bewegung nicht oder in vermindertem Umfang nachfolgt, wobei instabile Fahrtzustände insbesondere umfassen: eine Rotation oder Schwingung des Fahrzeuganhängers um die Hochachse, die Querachse oder die Längsachse (Gieren, Nicken oder Wanken), das Abheben mindestens eines Anhängerrades von der Fahrbahn und/oder translatorische Schwingungen in Längs- oder Querrichtung des Fahrzeuganhängers.

Die Stabilisierungstechnik gemäß der vorliegenden Erfindung umfasst ein Stabilisierungssystem mit einem Bremsaktuator zur überlagernden mechanischen Betätigung mindestens einer Anhängerbremse, insbesondere unter Überlagerung einer Basis-Betätigung für zwei oder mehr Radbremsen, die durch eine Auflaufeinrichtung erfolgt. Somit bleibt die energieversorgungsfreie und ausfallsichere Basis-Bremsfunktion auch bei einer Störung der Stabilisierungstechnik erhalten und der Fahrzeuganhänger kann im Bereich der gesetzlichen Zulassung mit beliebigen Zugfahrzeugen kombiniert werden. Das Stabilisierungssystem umfasst eine Steuerungseinheit, die bevorzugt mit dem Bremsaktuator zu einer gemeinsamen Baugruppe integriert ist.

Nachfolgend werden Ausführungsschritte für die Stabilisierungstechnik gemäß der vorliegenden Erfindung erläutert. Diese Ausführungsschritte werden bevorzugt durch eine Software in der Steuerungseinheit vollzogen. Mit anderen Worten umfasst die Stabilisierungstechnik gemäß der vorliegenden Erfindung ein Stabilisierungsverfahren zur Ansteuerung eines Bremsaktuators für das überlagernde Erzeugen von Bremskräften oder Stellbewegungen, um die Radbremsen eines Fahrzeuganhängers mechanisch zu betätigen. Das Stabilisierungsverfahren bezieht einen oder mehrere Messwerte von einem oder mehreren Sensoren am Fahrzeuganhänger, um eine Masse und/oder Beladung des Fahrzeuganhängers zu ermitteln. Das Stabilisierungsverfahren ist bevorzugt als Softwareprodukt auf einem maschinenlesbaren Datenträger abgelegt.

Nachfolgend wird vereinfachend die Formulierung verwendet, dass das Stabilisierungssystem dazu ausgebildet ist, einen bestimmen Ausführungsschritt vorzunehmen. Diese Formulierung bedeutet ebenfalls, dass ein Stabilisierungsverfahren gemäß der vorliegenden Erfindung diesen Ausführungsschritt umfasst.

Die Stabilisierungstechnik gemäß der vorliegenden Erfindung dient dazu, instabile Fahrtzustände des Fahrzeuganhängers zu vermeiden oder zu begrenzen bzw. zu vermindern. Für einen oder jeden der oben genannten instabilen Fahrtzustände können ein oder mehrere Messparameter vorgesehen sein, durch die die Zustände erkennbar sind. Insbesondere kann über einen oder mehrere

Beschleunigungssensoren, Gyrometer oder ähnliche Erfassungssysteme (ESP-Sensoren) die Fahrtbewegung des Anhängers hinsichtlich einer oder mehrerer der nachfolgenden Bewegungs-Parameter erfasst werden:
- translatorische Beschleunigung und/oder translatorische Geschwindigkeit in Längs- und/oder Querrichtung des Fahrzeuganhängers;
- Rotationsgeschwindigkeit und/der Rotationsbeschleunigung des Fahrzeuganhängers in Bezug auf die Hochachse (Gieren), Längsachse (Wanken) und/oder Querachse (Nicken).

Bevorzugt umfasst die Stabilisierungstechnik beispielsweise als Bestandteil des Stabilisierungssystem oder des Stabilisierungsverfahrens Auslöse-Grenzwerte, mit denen die vorgenannten Bewegungs-Parameter verglichen werden. Wenn ein Bewegungs-Parameter den Auslöse-Grenzwert überschreitet, wird ein instabiler Fahrtzustand erkannt. Beispielsweise kann ein Schlingern des Anhängers anhand von Oszillationen des Gierwinkels erkannt werden. Auslöse-Grenzwerte können beispielsweise das Betätigen des Bremsaktuators vorsehen, wenn eine bestimmte Anzahl von Schwingungen in einem bestimmten Zeitintervall erreicht oder überschritten wird und/oder wenn die Amplitude der Schwingung eine Grenzamplitude erreicht oder überschreitet. Entsprechende bzw. ähnliche Auslöse-Grenzwerte können für Schwingungen und/oder Absolutwerte und/oder relative Änderungen der anderen Bewegungs-Parameter vorgesehen sein.

Die Betätigung des Bremsaktuators kann in gesteuerter Weise und in unterschiedlicher Ausprägung erfolgen. Insbesondere sind eine maximale Betätigungskraft des Bremsaktuators und/oder eine Dynamik der Bremskraftänderung begrenzbar. Die Stabilisierungstechnik gemäß der vorliegenden Offenbarung umfasst bevorzugt Kraftbeschränkungs-Grenzwerte und/oder Dynamikbeschränkungs-Grenzwerte, die bevorzugt Bestandteil des Stabilisierungssystems und/oder des Stabilisierungsverfahrens sind.

Das Stabilisierungssystem gemäß der vorliegenden Erfindung weist einen oder mehrere Sensoren zur Erfassung der momentanen Masse und/oder Beladung des Fahrzeuganhängers auf. Ein Sensor ist ein technisches Mittel, das eine physikalische Größe in quantifizierter Weise erfasst und ein Messsignal ausgibt, das von einer Steuerungseinrichtung eingelesen und verarbeitet werden kann. Das Messsignal ist insbesondere ein elektronisches Datensignal.

Die momentane Masse und/oder Beladung des Fahrzeuganhängers kann sich aufgrund verschiedener Ereignisse ändern. Einerseits kann ein Fahrzeuganhänger ohne Beladung, leicht beladen oder schwer beladen bzw. überladen sein. Das heißt, die momentane Masse kann die Masse des Fahrzeuganhängers während einer Fahrt sein. Der Begriff "momentan" deckt in dieser Hinsicht ein Zeitintervall von der Länge einer Fahrt oder eines Teils einer Fahrt mit konstanter Beladung ab, also einen Zeitraum von wenigen Minuten bis wenigen Stunden. Dementsprechend kann es ausreichend sein, die Masse und/oder Beladung des Fahrzeuganhängers einmal zu Beginn einer Fahrt und ggfs. gelegentlich während der Fahrt zu erfassen. Die Menge und/oder Anordnung der Beladungsstücke kann sich andererseits auch während der Fahrt ändern, beispielsweise weil sich Frachtstücke verschieben oder vom Fahrzeuganhänger herabfallen. In diesem Sinne kann es zuträglich sein, die momentane Masse und/oder Beladung des Fahrzeuganhängers permanent oder zumindest sehr engmaschig zu erfassen. Der Begriff "momentan" deckt dann ein Zeitintervall von weniger als einer Sekunde bis zu wenigen Sekunden oder Minuten ab. Eine "permanente" Erfassung kann eine digitale Erfassung mit einer bestimmten Erfassungs-Frequenz oder eine analoge Erfassung oder eine analoge Erfassung mit einer Umsetzung in ein digitales Signal sein, wobei die Umsetzung ebenfalls bei einer bestimmten Frequenz erfolgen kann. Die Erfassung-Frequenz für eine permanente Erfassung der momentanen Masse und/oder Beladung kann bevorzugt im kHz- bis MHz-Bereich liegen.

Das Stabilisierungssystem gemäß der vorliegenden Erfindung ist dazu ausgebildet, die Betätigung des Bremsaktuators in Abhängigkeit von der momentanen Masse und/oder Beladung des Fahrzeuganhängers zu steuern, insbesondere zu begrenzen. Die Ermittlung der momentanen Masse und/oder Beladung erfolgt bevorzugt unabhängig von der Auslösung eines Bremseingriffs, d.h. die momentane Masse und/oder Beladung wird zeitlich vor der Auslösung eines Bremseingriffs ermittelt.

Mit anderen Worten wird eine antizipierende oder vorsteuernde Adaption der Bremseingriffe in Abhängigkeit von der momentanen Masse und/oder Beladung des Fahrzeuganhängers vorgenommen. Für die Ermittlung der momentanen Masse und/oder Beladung können also Wechselwirkungen mit den überlagerten Bremseingriffen außer Acht gelassen werden, was die Ermittlung vereinfacht. Außerdem kann verhindert werden, dass ein instabiler Fahrzustand durch einen inadäquaten Bremseingriff erst erzeugt oder verschlimmert, d.h. eskaliert wird. Eine solche Eskalation könnte beispielsweise folgen aus einem Überbremsen bei leichter oder ungleichmäßiger Beladung, einem intermittierenden oder impulsartigen Bremsen bei hoher Nick- oder Wankneigung oder aus einem zu späten oder zu leichten Bremseingriff bei hoher Beladung oder Überladung.

Erfindungsgemäß liegen zwei oder mehr vordefinierte Sätze an Grenzwerten zur Beschränkung oder Steuerung der Bremsaktuator-Betätigung vor, wobei ein geeigneter Grenzwertsatz in Abhängigkeit von einer erfassten momentanen Masse und/oder Beladung des Fahrzeuganhängers ausgewählt wird. Ein Grenzwertsatz kann insbesondere Grenzwerte zur Beschränkung oder Einstellung des Ansprechverhaltens, der Betätigungs-Intensität und/oder der Betätigungs-Dynamik des Bremsaktuators umfassen.

Die Erfassung der momentanen Masse und/oder Beladung des Fahrzeuganhängers ermöglicht eine Adaption der Bremseingriffe an vielfältige Beladungs-Zustände des Fahrzeuganhängers und ermöglicht die Verwendung der Stabilisierungstechnik für eine Vielzahl von Anhängermodellen ohne oder nur mit geringer Anpassung der Hard- und Software. Die Stabilisierungstechnik ist insbesondere geeignet, Fahrzeuganhänger verschiedenster Größen in allen Gewichtsklassen bis 3,5 Tonnen zu stabilisieren. Ferner wird eine Stabilisierung für Fahrzeuganhänger mit stark wechselnder Beladung und insbesondere stark variierendem Schwerpunkt ermöglicht, beispielsweise für Schiffsanhänger.

In Abhängigkeit von der ermittelten momentanen Masse und/oder Beladung können das Ansprechverhalten, die Intensität (maximale Stärke des Eingriffs) und die Dynamik eines Bremseingriffs adaptiert werden und zwar bereits bevor der Bremseingriff erfolgt bzw. ausgelöst wird. Darüber hinaus kann eine Adaption während eines Bremseingriffs erfolgen.

Durch die ein oder mehreren Sensoren können bevorzugt ein oder mehrere der folgenden Beladungs-Zustände des Fahrzeuganhängers einzeln oder in Kombination erfasst werden:
- Leerfahrt / keine Beladung
- Leichte oder normale Beladung
- Überladung
- Ungleichmäßige o. ungewöhnliche Lastverteilung, bspw. in Form von
   o rechts- oder linksseitiger Überlast
   o vorder- oder rückseitiger Überlast
   o in Vertikalrichtung hohem Schwerpunkt
   o beweglichen / ungesicherten Lastteilen
   o schwallenden oder schwappenden Lasten / bspw. Tankinhalte

Die ein oder mehreren Sensoren können gemäß einer ersten Ausführungsvariante die Masse und/oder Beladung des Fahrzeuganhängers direkt erfassen, bspw. durch Gewichtsmessung. Insbesondere können an den Auflagepunkten des Anhängerchassis Gewichtssensoren angeordnet sein, d.h. an den Achslagern und/oder an der Anhängekupplung und/oder am Bugrad.

Alternativ oder zusätzlich können die ein oder mehreren Sensoren die Masse und/oder Beladung des Fahrzeuganhängers indirekt erfassen, bspw. durch Messung der momentanen Zug- oder Druckkräfte auf den Fahrzeuganhänger im Bereich der Anhängerkupplung längs und/oder quer zur Fahrtrichtung und/oder in vertikaler Richtung sowie etwaig im Bereich der Achslager und durch Vergleich dieser Kräfte mit dem momentanen Bewegungsverhalten des Fahrzeuganhängers. Es können insbesondere die Verläufe der ermittelten Kräfte vergleichen werden mit den Verläufen der momentanen Längs- und Querbeschleunigung sowie der Nick-, Wank- und Gierrate. Aus einem Vergleich der an den Kontaktpunkten des Anhängerchassis gemessenen Kräfte mit dem (daraus resultierenden) Bewegungsverhalten des Anhängers, insbesondere mit einer oder mehreren Beschleunigungen in Längs- oder Querrichtung sowie um die Längs-, Quer- oder Hochachse, können die Masse und/oder Beladung des Fahrzeuganhängers rechnerisch ermittelt werden. Insbesondere können die Schwerpunktlage und/oder die Gesamtmasse und/oder eine momentane wirksame Masse (bei losen Frachstücken oder schwallenden Lasten) zu verschiedenen Zeitpunkten ermittelt werden.

Alternative oder zusätzliche Varianten zur Erfassung der momentanen Masse und/oder Beladung des Fahrzeuganhängers sind:
- Spannungsmessung an einem lasttragenden Teil des Fahrzeuganhängers, insbesondere jeweils einzeln oder in Kombination an einem der folgenden Teile des Fahrzeuganhängers: Achslager, Achsstummel, Schwinghebel, Achsrohr, Zugdeichsel;
- Messung eines magnetostriktiven Effekts an einem lasttragenden Teil des Fahrzeuganhängers, insbesondere jeweils einzeln oder in Kombination an einem der folgenden Teile des Fahrzeuganhängers: Achslager, Achsstummel, Schwinghebel, Achsrohr, Zugdeichsel;
- Erfassung des Einfederweges der Achsfederung und/oder der Auflaufeinrichtung und Berechnung der gesamten oder anteiligen Masse aus der erfassten Dehnung / Stauchung des jeweiligen elastischen Elements und seiner Federhärte / Elastizitätskonstante; Der Einfederweg kann direkt oder indirekt erfasst werden, bspw. durch eine Bestimmung der Bewegung oder momentanen Position eines Schwinghebels gegenüber einem festen Teil des Fahrzeuganhängers, insbesondere gegenüber einem Teil des Anhängerrahmens, oder durch eine Bestimmung der Aufstandshöhe bzw. freien Höhe des Anhängerrahmens über dem Boden; Bevorzugte Messgrößen können sein: Bewegung / Position des Schwinghebels, Bewegung / Position eines Dämpfungselements (Stoßdämpfer), Messung eines Abstands zwischen einem Teil des Fahrzeuganhängers und dem Boden, etc. Weiter unten wird die Funktion eines Federsystems oder Feder-Dämpfersystems im Bereich einer Auflaufbremseinrichtung erläutert, aus dessen gemessener Stauchung eine Masse und/oder Beladung des Fahrzeuganhängers ermittelbar ist. Dieselben Prinzipien können auf jedes andere elastische Element übertragen werden, das unter Einfluss der Masse und/oder Beladung des Fahrzeuganhängers bewegt wird, also beispielsweise die Stauchung eines Stoßdämpfers etc.
- Schätzung oder Berechnung der Masse und/oder Beladung aus dynamischen Zuständen (Einzelzustände oder Zustandsvergleich) während einer Beschleunigung in einer bekannten Richtung (translatorisch) oder um eine bekannte Achse (rotatorisch) gemäß der dynamischen Basis-Gleichung m = F / a (Masse = Kraft dividiert durch Beschleunigung).
- Schätzung oder Berechnung der Masse und/oder Beladung aus dynamischen Verläufen (Zeitintervall-Vergleich) während einer Beschleunigung in einer bekannten Richtung (translatorisch) oder um eine bekannte Achse (rotatorisch) gemäß der dynamischen Beziehung m(t) = F(t) / a(t). Dabei können insbesondere schwingungsbehaftete dynamische Verläufe verglichen und analysiert werden.

Zur Messung können beliebige Prinzipien genutzt werden. Für die direkte Erfassung einer Masse bzw. einer Gewichtskraft eignen sich Kraftsensoren wie Piezo-Elemente, Drucksensoren, Momentensensoren etc. Diese können insbesondere angeordnet sein an: Achslager, Achsstummel, Schwinghebel, Achsrohr, Zugdeichsel, Bugrad, Dämpferelement, etc.

Für die Erfassung einer Bewegung oder Position sind in der Praxis zahlreiche Messmittel bekannt und üblich, die als Wegsensor bspw. eine Länge, Position oder Längenänderung auf einem induktiven Effekt, einem kapazitiven Effekt, einer Widerstandsänderung, einer optischen Erfassung oder einer akustischen Erfassung (Ultraschall) ermittelt. Dementsprechend können ein oder mehrere Wegsensoren, die einen oder mehrere der vorgenannten Effekte nutzen, angeordnet sein an: Achslager, Achsstummel, Schwinghebel, Achsrohr, Zugdeichsel, Bugrad, Dämpferelement, etc.

Eine Erfassung der Aufstandshöhe bzw. freien Höhe des Anhängerrahmens über dem Boden kann ggfs. zusätzlich genutzt werden, um das tatsächliche oder bevorstehende Abheben eines Fahrzeugrades vom Boden zu erfassen, was ebenfalls für die Erkennung eines instabilen Fahrzustands auswertbar ist.

Zur Erfassung einer mechanischen Spannung können ein oder mehrere Dehnmessstreifen verwendet werden und/oder ein oder mehrere magnetostriktive Aufnehmer. Dehnmessstreifen sind in der Praxis in verschiedener Weise bekannt. Gemäß einer bevorzugten Ausführung kann ein laserstruturierter Dehnmesstreifen verwendet werden, der an einem der vorgenannten lasttragenden Teile des Anhängers angebracht ist, insbesondere an einem Achszapfen bzw. Achsstummel. Ein Dehnmesstreifen kann auf die Oberfläche des lasttragenden Teils aufgebracht sind, bspw. auf einem Zapfenmantel. Ein magnetostriktiver Aufnehmer erfasst Biegeverformungen eines der vorgenannten lasttragenden Teile eines Anhängers, insbesondere eines Achszapfens bzw. Achsstummels und die damit einhergehenden Änderungen des Magnetfelds.

Eine besonders einfache Form der Ermittlung der Masse des Fahrzeuganhängers besteht darin, über einen Sensor an der Zugdeichsel oder Anhängekupplung eine horizontale Zugkraft in Längsrichtung des Fahrzeuganhängers zu erfassen und parallel die Längsbeschleunigung auf den Fahrzeuganhänger zu erfassen, insbesondere durch einen ESP-Sensor. Dann kann gemäß der o.g. Grundgleichung m = FL / aL (m: Masse, FL: Zugkraft in Längsrichtung, aL: Längsbeschleunigung) die momentane (Gesamt-) Masse des Fahrzeuganhängers (indirekt) ermittelt werden.

Die momentane Masse und/oder Beladung des Fahrzeuganhängers ist infolge der direkten oder indirekten sensorischen Erfassung für die Steuerungseinheit als quantifizierte Größe vorhanden, die bevorzugt im Vergleich zu anderen Messwerten und/oder vorbestimmten Zustandserkennungs-Grenzwerten analysiert wird. Die momentane Masse und/oder Beladung ist insbesondere als zeitlich variable Größe vorhanden.

Die Masse und/oder Beladung kann als Einzel-Parameter oder als Satz von Parametern erfasst werden, auf deren Basis die Erzeugung der überlagerten Betätigungskräfte bzw. Stellbewegungen gesteuert bzw. adaptiert werden.

Der Begriff Masse bzw. Beladung umfasst bevorzugt zumindest die Gesamtmasse des Fahrzeuganhängers (inklusive Beladung). Alternativ oder zusätzlich können die Einzel-Masse des Fahrzeuganhängers und der Last separat erfasst werden. Darüber hinaus kann der Begriff "Masse und/oder Beladung" die folgenden Parameter umfassen: vertikale Höhe des Schwerpunktes (gemeinsam oder separat für Fahrzeuganhänger und Last); Längs- und/oder Querverteilung der Last bzw. Längs- oder Querlage des Schwerpunktes (gemeinsam oder separat für Fahrzeuganhänger und Last); Trägheitsmoment des Fahrzeuganhängers um die Längsachse und/oder um die Querachse und/oder um die Hochachse (Achsverläufe bevorzugt durch den ermittelten Schwerpunkt) (gemeinsam oder separat für Fahrzeuganhänger und Last). Gemäß den Gesetzen der Mechanik kann ggfs. zwischen den vorgenannten Parametern umgerechnet werden, sodass nur ein Teil der Parameter direkt erfasst und andere Parameter indirekt erfasst werden können.

Die momentane Masse und/oder Beladung des Fahrzeuganhängers, insbesondere die vorgenannten Parameter, kann/können mit einem oder mehreren Zustandserkennungs-Grenzwerten verglichen werden, um einen momentanen Beladungs-Zustand des Fahrzeuganhängers zu identifizieren. In Abhängigkeit von der Masse und/oder Beladung und insbesondere in Abhängigkeit von dem identifizierten Beladungs-Zustand können diverse Adaptionen für die Bremseingriffe zur Vermeidung oder Begrenzung eines instabilen Fahrverhaltens vorgenommen werden. Insbesondere können einzeln oder in Kombination adaptiert werden:
- Das Ansprechverhalten, d.h. der Zeitpunkt eines Bremseingriffs bzw. die zu erreichenden oder zu überschreitenden Grenzwerte für die Auslösung eines Bremseingriffs (Auslöse-Grenzwerte);
- Die Intensität, d.h. der (absolute) Betrag eines auszuführenden Bremseingriffs, insbesondere durch Vorgabe eines angepassten Maximalwertes für den Bremseingriff (Kraftbeschränkungs-Grenzwert);
- Die Dynamik, d.h. die zulässige zeitliche Änderungsrate eines Bremseingriffs, insbesondere durch Vorgabe einer angepassten maximalen Änderung pro Zeiteinheit für eine aufzubringende Bremskraft (Dynamikbeschränkungs-Grenzwert).

Mit anderen Worten kann je nach momentaner Masse und/oder Beladung des Fahrzeuganhängers ein frühes oder spätes Eingreifen und/oder ein starkes oder schwaches Eingreifen und/oder ein impulsartiges oder gemächliches Eingreifen zur Vermeidung oder Begrenzung einer instabilen Fahrsituation gewählt werden. Dies wird nachfolgend beispielhaft für verschiedene Zustände eines Fahrzeuganhängers erläutert.

Während eines Bremseingriffs kann unterhalb eines Kraftbeschränkungs-Grenzwerts und/oder eine Dynamikbeschränkungs-Grenzwerts kann eine Regelung der Intensität und/oder der Dynamik nach anderen Einflussgrößer als der momentanen Masse und/oder Beladung erfolgen, insbesondere in Abhängigkeit von dem Ausmaß des instabilen Fahrzustands, also beispielsweise in Abhängigkeit von der Frequenz oder der Amplitude einer Gierschwingung, etc.

Wenn die ermittelte Masse (Gesamtmasse) des Fahrzeuganhängers unterhalb eines ersten Beladungs-Grenzwertes liegt, kann eine Leerfahrt des Fahrzeuganhängers identifiziert werden.

Bei einer Leerfahrt eines Fahrzeuganhängers können die Grenzwerte für die Auslösung eines überlagerten Bremseingriffes erhöht werden. Die Dynamik der Eingriffe kann hoch sein, d.h. es können impulsartige intermittierende Bremseingriffe und/oder schnelle Wechsel zwischen starken und schwachen Bremseingriffen zugelassen werden. Die maximale Bremskraft kann bei einem verhältnismäßig niedrigen Wert begrenzt werden.

Leichte und mittelschwere Fahrzeuganhänger zeigen bei Leerfahrten wegen der geringeren Masse (Gesamtmasse) eine verstärkte Neigung zum Gieren oder Wanken. Bei Bodenwellen kann es auch zu einem leichten Hüpfen des Fahrzeuganhängers kommen. Allerdings besteht bei leicht instabilem Fahrverhalten von leeren Anhängern noch kein stark erhöhtes Risiko für eine Eskalation und es reichen oft schon geringe Bremseingriffe aus, um das instabile Fahrverhalten zu begrenzen. D.h. es können verhältnismäßig höhere Grenzwerte für die Feststellung eines instabilen Fahrverhaltens festgelegt werden. Die maximal aufzubringende Bremskraft kann hingegen verhältnismäßig niedrig angesetzt werden.

Wenn die ermittelte Masse (Gesamtmasse) des Fahrzeuganhängers oberhalb des ersten Beladungs-Grenzwertes und unterhalb eines zweiten höheren Beladungs-Grenzwertes liegt, kann eine leichte Beladung des Fahrzeuganhängers identifiziert werden. Gleichzeitig kann eine Schwerpunktlage in vertikaler Richtung ermittelt und mit einem Höhenlage-Grenzwert vergleichen werden. Wenn die Schwerpunktlage in vertikaler Richtung den Höhenlage-Grenzwert überschreitet, kann ein hoher Schwerpunkt identifiziert werden.

Für einen leicht beladenen Fahrzeuganhänger mit einem hohen Schwerpunkt können geringe Grenzwerte für die Auslösung von Bremseingriffen, verhältnismäßig niedrige Bremskräfte und ggfs. träge Änderungen für die Bremskraft vorgesehen werden.

Leicht beladene Fahrzeuganhänger mit einem hohen Schwerpunkt der Last zeigen eine erhöhte Neigung zu instabilem Fahrverhalten hinsichtlich Wank- und Nickbewegungen. Schon bei etwas stärkeren Änderungen des gefahrenen Kurvenradius können durch den hohen Schwerpunkt trägheitsbedingte Wankbewegungen entstehen, die sich zu Wankschwingungen aufschaukeln können. Verstärktes Bremsen oder Beschleunigen kann zu trägheitsbedingten Nickbewegungen führen, die sich zu Nickschwingungen aufschaukeln können. Durch den hohen Schwerpunkt der Last besteht ferner ein erhöhtes Risiko, dass sich die Wankschwingungen zu unkontrollierbaren Fahrinstabilitäten ausweiten oder dass Nickschwingungen zu einem Ablösen der Anhängekupplung vom Zugfahrzeug führen. Daher empfiehlt es sich, die Bremseingriffe bereits früh vorzunehmen, d.h. die Grenzwerte für das Auslösen der überlagerten Bremskraft bzw. Stellbewegung niedriger anzusetzen. Der Betrag der Bremskraft kann häufig niedrig gewählt werden. Mit anderen Worten kann ein niedriger Maximalwert für die auszulösende Bremskraft vorgesehen werden. Insbesondere sollte ein Überbremsen vermieden werden, durch welches ein Blockieren eines oder mehrerer Räder begünstigt werden könnte. Ein Blockieren kann zu einem erhöhten Risiko für ein seitliches Ausbrechen des Fahrzeuganhängers führen, d.h. dass eine bereits bestehende Wankbewegung teilweise in eine überlagerte Gierbewegung oder eine Gierschwingung umgesetzt wird, weil eine seitliche Führung des Fahrzeuganhängers im Bereich der Räder beim Blockieren zumindest kurzzeitig wegfällt. Die Dynamik der Bremskraftänderung sollte eher träge bzw. gemächlich gewählt werden, damit nicht durch die Bremsung weitere Nick- oder Gier-Bewegungen erzeugt werden, die ggfs. ein Aufschwingen begünstigen. Mit anderen Worten kann bei einem hohen Schwerpunkt die zeitliche Änderungsrate für die Bremseingriffe vergleichsweise niedrig gewählt werden.

Im Fall von überladenen und insbesondere stark überladenen Fahrzeuganhängern (in der Regel mit niedrigem Schwerpunkt) kann ein frühes Eingreifen mit vergleichsweise hohen Bremskräften vorgesehen werden. Die Dynamik der Bremseingriffe kann mit vergleichsweise hohen zeitlichen Änderungsraten der Bremskräfte erfolgen. Schwere Anhänger haben infolge der hohen Masse ein vergleichsweise träges Verhalten. Die Masse dämpft einerseits die Quer- und Längsbeschleunigung sowie andererseits Nick- und Wankbewegungen, sofern der Schwerpunkt relativ nahe am Achsmittelpunkt liegt. Ein Blockieren der Räder ist eher nicht zu befürchten. Allerdings können die Auswirkungen von Wank- oder Nickschwingungen deutlich gravierender ausfallen, als bei leichter Beladung. Ferner sind höhere Bremsverzögerungen erforderlich, um dem instabilen Fahrverhalten entgegenzuwirken.

Die Erfassungstechnik gemäß der vorliegenden Erfindung, d.h. eine Erfassungseinrichtung und ein Erfassungsverfahren, ermöglicht bevorzugt eine Massen- bzw. Gewichtserfassung im Stand des Fahrzeuganhängers. Diese Erfassung kann vor Fahrbeginn erfolgen, so dass die erfassten Daten bereits vor erstmaliger Betätigung bzw. Funktion der Stabilisierungstechnik bekannt sind und für deren Optimierung von Anfang an eingesetzt werden können. Mit anderen Worten wird eine antizipierende oder vorsteuernde Adaption der Bremseingriffe in Abhängigkeit von der momentanen Masse und/oder Gewicht bzw. Beladung des Fahrzeuganhängers vorgenommen. Dies ist besonders günstig für Fahrzeuganhänger, insbesondere Nutzanhänger, bei denen die Differenz zwischen Leergewicht und zulässigem Gesamtgewicht sehr groß sein kann und mehrere Tonnen betragen kann. Die Stabilisierungstechnik kann sich an solche starken Massen- bzw. Gewichtsänderungen optimal anpassen und für jeden Beladungszustand die optimale Funktion bieten. Eine Massen- bzw. Gewichtserfassung im Stand hat außerdem Vorteile für eine Kontrolle des Beladungszustands zu anderen Zwecken.

Die Erfassungseinrichtung gemäß der vorliegenden Erfindung kann eine oder mehrere lasterfassende Sensoriken aufweisen, die am Fahrzeuganhänger angeordnet sind bzw. zur Anordnung an einem Fahrzeuganhänger vorgesehen und ausgebildet sind. Die Erfassungseinrichtung, insbesondere eine Sensorik, kann eine Signaleinrichtung zur Signalübertragung an die Steuerung, an eine Anzeige oder an einen anderen Empfänger aufweisen. Diese Signalübertragung erfolgt bevorzugt drahtlos, wobei sie alternativ oder zusätzlich auch drahtgebunden geschehen kann.

Für die Zahl, Ausbildung und Anordnung der besagten Sensorik gibt es gemäß den obigen Ausführungen verschiedene Möglichkeiten. In einer Ausführungsform ist eine Sensorik im Bereich eines Fahrzeugrads angeordnet, insbesondere an einer Radlagerung. Dies betrifft bevorzugt ein Fahrzeugrad, welches an einer Radlenkerachse angeordnet ist. Die Sensorik ist in einer besonders günstigen Ausführungsform im Bereich eines Achszapfens oder Achsstummels angeordnet. Sie kann dabei dessen Biegeverformungen erfassen. Die Messung kann vorteilhafterweise an zwei oder mehr über die Zapfenlänge verteilten diskreten Stellen erfolgen. Aus der Biegeverformung kann die Masse bzw. das Gewicht des Fahrzeuganhängers ermittelt werden.

Die besagte Sensorik kann an einem oder an mehreren, insbesondere an allen Fahrzeugrädern angeordnet sein. Eine beidseitige Anordnung an den gegenüberliegenden Rädern einer Achse bzw. an beiden Längsseiten des Fahrzeuganhängers ermöglicht die Erfassung von Lastdifferenzen. Hieraus können Informationen über Wankbewegungen des Fahrzeuganhängers, eine Schwerpunktverlagerung durch Ladungsverschiebung oder dgl. andere Erscheinungen detektiert werden.

Die lasterfassende Sensorik im Radbereich kann in unterschiedlicher Weise ausgebildet sein. Vorzugsweise weist sie einen oder mehrere Sensoren auf, die am Achszapfen bzw. Achsstummel oder in dessen Umgebung angeordnet ist/sind. Ein solcher Sensor kann z.B. Dehnmessstreifen am Achszapfen, insbesondere als laserstrukturierter Dehnmessstreifen auf dem Zapfenmantel, ausgebildet sein. Ein alternativer oder zusätzlicher Sensor kann z.B. als magnetostriktiver Aufnehmer ausgebildet sein. Er erfasst Biegeverformungen des Achszapfens bzw. Achsstummels und die damit einhergehenden Änderungen des Magnetfelds. Alternativ oder zusätzlich kann eine Sensorik im Bereich einer Achse, insbesondere eine Achslagerung, und/oder im Bereich einer Deichsel angeordnet sein.

Aus einer lasterfassenden Sensorik der Erfassungseinrichtung, insbesondere aus deren Mehrfachordnung, können auch Zusatzinformation für die Detektion eines kritischen Fahrzustands gewonnen werden. Die diesbezügliche (Schlinger-)Sensorik kann von der oder den lasterfassenden Sensorik(en) ergänzt oder ggf. ersetzt werden.

Die Verarbeitung und Auswertung der Sensorsignale für die Lasterfassung erfolgt in einer Verarbeitungseinrichtung, die als separate Verarbeitungseinrichtung vorliegen oder in der Steuerung der Stabilisierungseinrichtung angeordnet bzw. implementiert sein kann. Die Übermittlung der Sensor- und/oder Verarbeitungssignale kann auf beliebige Art, vorzugsweise drahtlos erfolgen.

Die Sensorsignale und/oder die hieraus ermittelten Massen- bzw. Gewichtswerte können an einer Anzeige am Fahrzeug und/oder an einer fahrzeugexternen Anzeige angezeigt werden. Dies kann auf optischen, akustischen oder anderem Wege geschehen. Eine fahrzeugexterne Anzeige kann an einem mobilen externen Anzeigegerät, z.B. einem Smartphone, Tablet oder dgl. oder auch in einem Zugfahrzeug erfolgen.

Die Stabilisierungseinrichtung kann außer den besagten kritischen Fahrzuständen auch andere Zustände erfassen und bedarfsweise kommunizieren sowie signalisieren. Dies können eigene Betriebszustände der Stabilisierungseinrichtung, Zustände von Anhängerkomponenten z.B. Bremsbelag-Verschleiß, Bremstemperatur etc. oder Zustände in der Umgebung, z.B. Fahrzeugabstand von einem Hindernis, Neigung des Untergrunds oder dgl. sein. Die Signaleinrichtung hat zur Kommunikation dieser Daten nach außen eine Kommunikationseinrichtung, die in einer bevorzugten Ausführung drahtlos funktioniert. Sie kann alternativ oder zusätzlich drahtgebunden funktionieren.

Die Stabilisierungstechnik kann eine eigenständige Technik sein, die zusammen mit der Massen-Erfassungstechnik und der Kommunikationstechnik an einem Fahrzeuganhänger bei der Erstausrüstung implementiert oder später nachgerüstet werden kann. Die Massen-Erfassungstechnik kann auch bei einer bestehenden Stabilisierungstechnik nachgerüstet werden. Ferner kann auch die besagte Detektion von weiteren Zuständen und Funktionen von Anhängerkomponenten und/oder von der Umgebung bei der Erstausrüstung implementiert oder nachgerüstet werden.

Die Nachrüstungen können ohne größere Eingriffe am bestehenden Fahrzeuganhänger erfolgen. Insbesondere ist keine erneute Zulassung des Fahrzeuganhängers erforderlich. Außerdem kann diese Zusatzfunktionalität und zusätzliche Erfassung sehr kostengünstig implementiert werden und bedarf auch keiner separaten Signalisierungs- und Kommunikationstechnik.

In der nachfolgenden Zeichnungsbeschreibung, den beifügten Figuren sowie den Ansprüchen sind weitere vorteilhafte Ausführungsvarianten der Erfindung angegeben.

Die Erfindung ist in den Zeichnungen beispielhaft und schematisch dargestellt. Es zeigen:
- Figur 1:: Eine schematische Draufsicht auf einen Fahrzeuganhänger mit einem Stabilisierungssystem gemäß der vorliegenden Erfindung;
- Figur 2:: Eine vergrößerte Darstellung eines Bremsaktuators und einer Steuereinheit;
- Figur 3:: eine Radlenkerachse mit einer radseitigen lasterfassenden Sensorik in einer schematischen perspektivischen Ansicht;
- Figur 4:: Eine Explosionsdarstellung der Anordnung von Figur 3;
- Figur 5:: einen schematischen Längsschnitt durch die Anordnung von Figur 3 und 4.

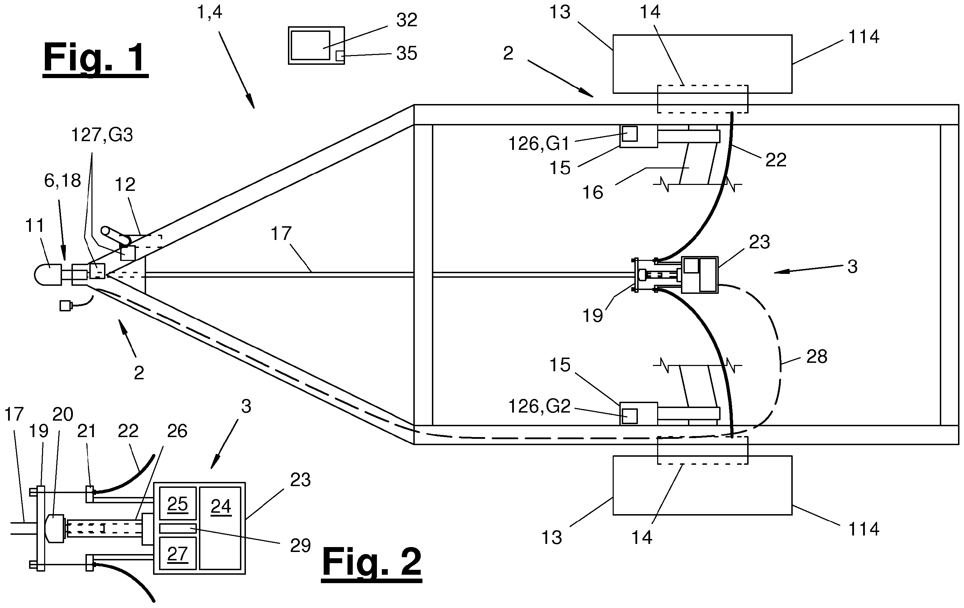

In Figur 1 ist ein Fahrzeuganhänger (1) dargestellt, der ein Basis-Bremssystem (6) (Betriebsbremse) umfasst. Das Basis-Bremssystem (6) arbeitet gemäß der bevorzugten Ausführung mechanisch und umfasst eine Auflaufeinrichtung (18), einen Bremszug oder eine Bremsstange (17) sowie von dem Bremszug oder der Bremsstange direkt oder indirekt betätigbare Radbremsen (14) an den Anhängerrädern (13). Weiterhin kann das Basis-Bremssystem (6) eine Feststellbremse umfassen, insbesondere eine Handbremse (nicht dargestellt), die bevorzugt an der Deichsel angeordnet ist.

In dem gezeigten Beispiel verfügt das Bremssystem über Kraftleitungsmittel in Form von Bremsseilen oder Bremsstangen, welche Zug- oder Druckkräfte zu den Radbremsen (14) leiten. Alternativ können beliebige andere Kraftleitungsmittel vorgesehen sein, die Zug-oder Druckkräfte für die Basis-Betätigung zu den Radbremsen (14) führen. Dies können insbesondere fluidische Kraftleitungsmittel sein.

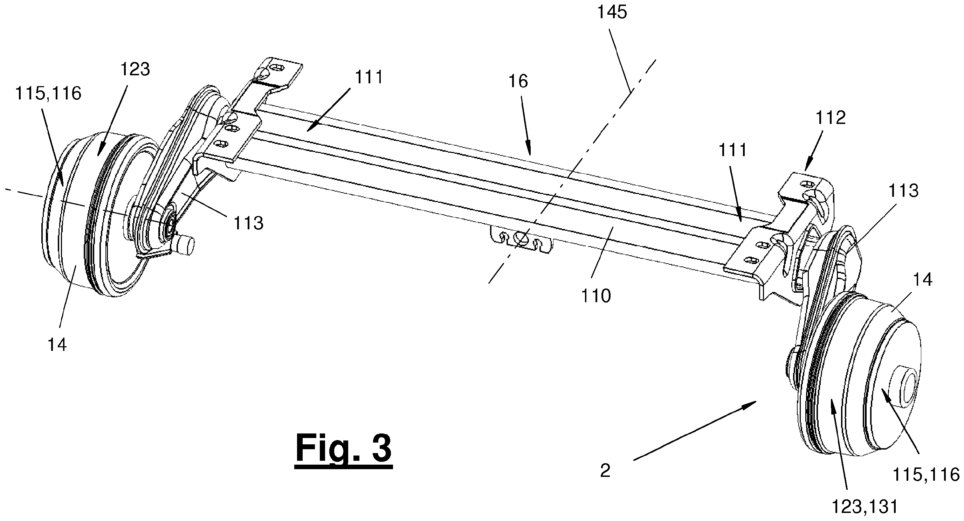

Der Fahrzeuganhänger (1) weist ein Fahrgestell (4) mit einer oder mehreren Achsen (16) nebst Fahrzeugrädern auf. Die ein oder mehreren Achsen (16) sind bevorzugt als Radlenkerachse, z.B. als Längslenkerachse gemäß Figur 3 oder als Schräglenkerachse ausgebildet.

Eine Radlenkerachse (9) weist in den verschiedenen Varianten jeweils einen bevorzugt hohlen, rohrförmigen Achskörper (110) auf, der sich vorzugsweise über die gesamte Fahrzeugbreite erstreckt. Ferner ist an den Enden des Achskörpers (110) jeweils ein Radlenker (113) schwenkbar gelagert. Die Radlenkerachse (16) kann ferner eine Federung (111) umfassen. Diese kann z.B. als Gummifederung oder als Drehstabfederung ausgebildet sein und zwischen Achskörper (110) und Radlenker(n) (113) angeordnet sein. Die Achse (16) ist dabei als Gummifederachse oder als Drehstabfederachse ausgebildet. Alternativ kann die Federung (111) als außenseitige Luftfederung, Schraubenfederung oder in anderer Weise ausgebildet sein.

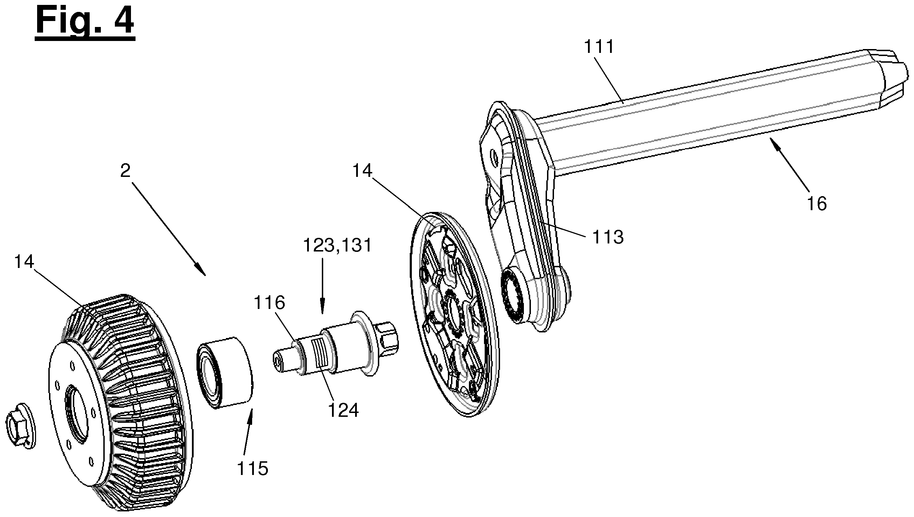

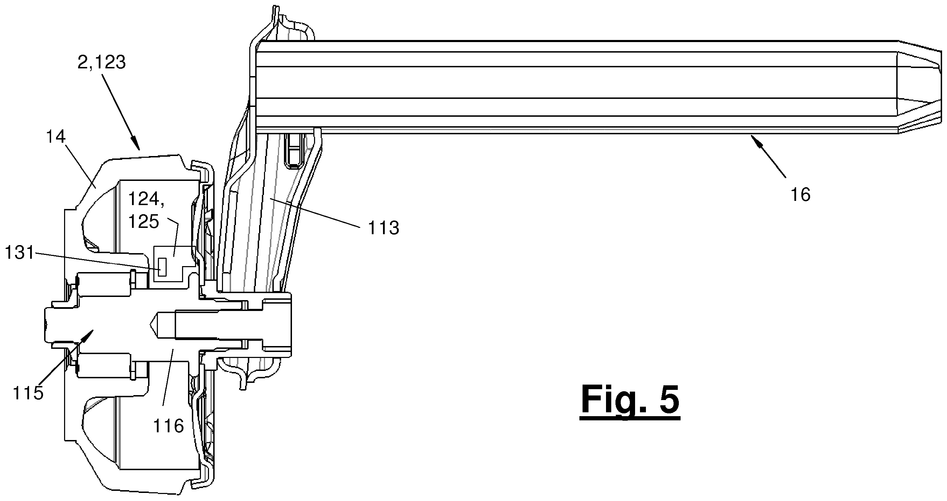

Figuren 3 bis 5 zeigen eine bevorzugte Ausbildung einer Radlenkerachse, wobei in Figur 4 und 5 der Achskörper (110) nicht dargestellt ist. Die Radlenker (113) sind in geeigneter Weise drehbar mit dem Achskörper (110) verbunden. Vorzugsweise weisen sie einen Schwinghebel auf, der am einen Ende am Achskörper (110) gelagert ist und am anderen Ende das Rad (114) nebst einer Radlagerung (115) trägt. Am einen Schwinghebelende kann eine quer abstehende, außenseitig profilierte Lagerstange mit Gummischnüren, Drehstabfeder oder dgl. angeordnet sein, die in den rohrförmigen Achskörper (110) eintaucht und hier gelagert ist. Am anderen Ende trägt der Radschwinghebel einen quer abstehenden Achszapfen (116), der auch als Achsstummel bezeichnet wird.

Der Achszapfen (116) ist am rückwärtigen Ende mit einem Bremsträgerschild und mit einer Führungsbuchse am Schwinghebelende fest verbunden. Auf dem im Durchmesser abgestuften Achszapfen (116) ist am vorderen Ende ein Kompaktlager zur Bildung der Radlagerung (115) angeordnet, auf dem die Nabe und ein Teil der Radbremse (14) drehbar gelagert sind. Die Radbremse (14) ist z.B. als Trommelbremse ausgebildet, wobei die Bremstrommel mitsamt der Nabe auf dem Kompaktlager angeordnet ist. Alternativ ist eine andere Bremsausbildung z.B. als Scheibenbremse möglich, die mechanisch, elektrisch, hydraulisch oder in sonstiger Weise betätigt werden kann.

Bei der in Figur 3 gezeigten Längslenkerachse (16) ist der Achskörper (110) als gerades Rohr ausgebildet, wobei die Radlenker (113) längs der zentralen Längsachse (145) des Fahrzeuganhängers (1) ausgerichtet sind. Bei einer (nicht dargestellten) Schräglenkerachse kann der rohrförmige Achskörper (110) eine abgewinkelte Form haben, wobei die Krümmung zum Fahrzeugheck weist. Die Radlenker (113) sind dann bevorzugt schräg zur zentralen Längsachse (145) des Fahrzeuganhängers (1) ausgerichtet.

In einer weiteren nicht dargestellten Ausführungsform kann die Achse (16) als Stummelachse oder Halbachse ausgebildet sein, die einen in der Länge verkürzten Achskörper (110) und nur an einer Seite einen Radlenker (113) aufweist.

Das Fahrgestell (4) trägt gegebenenfalls einen Aufbau, z.B. einen Kasten-, Pritschen- oder Kipperaufbau, insbesondere einen Wohnwagenaufbau. Das Fahrgestell (4) besteht in einer bevorzugten Ausführung aus zwei oder mehr parallelen Längsträgern und ggf. ein oder mehreren Querträgern, die jeweils aus mehrfach abgekanteten Metallprofilen, insbesondere Stahlprofilen, gebildet sein können. Alternativ sind andere Materialien und Bauformen des Fahrgestells (4) möglich.

Ferner weist das Fahrgestell (4) an der Front bevorzugt eine Deichsel auf. Diese ist vorzugsweise als starre Deichsel ausgebildet. Es kann eine V-Deichsel wie in den gezeigten Ausführungsbeispielen oder eine Rohrdeichsel oder dgl. sein. Am vorderen Deichselende ist eine Anhängerkupplung (11) angeordnet, die z.B. als Kugelkopfkupplung ausgebildet ist. Ferner können am Fahrgestell (4) ein ausfahrbares Stützrad bzw. Bugrad (12) und eine Halterung mit Unterlegkeilen (nicht dargestellt) sowie weitere Anhängerkomponenten angeordnet sein.

Wenn der Fahrzeuganhänger über die Anhängekupplung (11) an einem Zugfahrzeug (nicht dargestellt) angehängt ist und das Zugfahrzeug beschleunigt, wird eine Zugkraft an der Anhängekupplung (11) in Längsrichtung des Fahrzeuganhängers (1) erzeugt. Durch diese Zugkraft wird der Fahrzeuganhänger (1) beschleunigt, wobei der momentane Wert der Beschleunigung gemäß den Gesetzen der Dynamik im Wesentlichen proportional zur Zugkraft und indirekt proportional zur Gesamtmasse des Anhängers ist.

Wenn das Zugfahrzeug während der Fahrt abbremst, läuft der Fahrzeuganhänger (1) infolge seiner Trägheit auf das Zugfahrzeug auf. Hierbei wird die Auflaufeinrichtung (18) betätigt.

Die Auflaufeinrichtung (18) kann eine beliebige bekannte Ausbildung haben. Sie kann insbesondere eine Federung und etwaig eine Dämpfung (Feder-Dämpfersystem) beinhalten. Das Feder-Dämpfersystem wird beim Abbremsen des Zugfahrzeugs gestaucht und die Stauchbewegung wird in eine Bewegung des Bremszugs (17) gewandelt.

Der Grad der Stauchung hängt in der Regel von den Federungs- und Dämpfungsparametern der Auflaufeinrichtung (18) ab und kann gemessen werden (bspw. zur indirekten Ermittlung der Masse oder Beladung des Anhängers, siehe unten). Die Auflaufeinrichtung (18) betätigt bei einer Stauchung die Radbremsen (14) über eine mechanische Verbindung. In dem gezeigten Beispiel ist die Auflaufeinrichtung (18) über ein Bremsgestänge (17) mit einem Waagbalken (19) verbunden. Wie in Figur 2 vergrößert dargestellt, ist an dem Bremsgestänge (17) ein Mitnehmer (20) angeordnet, an dem der Waagbalken (19) rückseitig abgestützt ist. Wenn das Bremsgestänge (17) durch die Auflaufeinrichtung (18) in der Anzugrichtung für die Basis-Betätigung der Radbremsen (14) bewegt wird, wird der Waagbalken (19) durch den Mitnehmer (20) verschoben.

An dem Waagbalken (19) sind außenseitig Bremskabel (22) angeschlossen, die bevorzugt in Bowdenzügen zu den jeweiligen Radbremsen (14) geführt sind. Die Bowdenzüge sind jeweils an einer Halterung (21) gegenüber dem Fahrzeuganhänger (1), insbesondere gegenüber der Achse (16) oder einem Querträger abgestützt. Durch das Bewegen des Waagbalkens (19) werden die Bremskabel angezogen, sodass die Basis-Betätigung der Radbremsen (14) über eine mechanische Verbindung bewirkt wird.

Der Fahrzeuganhänger (1) ist zusätzlich mit der Stabilisierungstechnik gemäß der vorliegenden Erfindung ausgestattet. Er umfasst ein Stabilisierungssystem bzw. eine Stabilisierungseinrichtung (3) mit einem Bremsaktuator (23) zur überlagernden mechanischen Betätigung der Anhängerbremse, hier zur mechanischen Betätigung der Radbremsen (14). Die Stabilisierungseinrichtung (3) weist einen beliebig ausgebildeten Bremsaktuator (23) auf, der bei einem kritischen Fahrzustand eine oder mehrere Radbremsen (17) betätigt, wobei durch die Bremswirkung der kritische Fahrzustand bekämpft bzw. beseitigt und restabilisiert wird. Eine Schlingerbewegung des Fahrzeuganhängers (1) wird z.B. durch die besagte Bremswirkung gedämpft und beseitigt.

Die Stabilisierungseinrichtung (3), insbesondere deren Bremsaktuator (23), kann an beliebig geeigneter Stelle des Fahrzeuganhängers (1) angeordnet sein. Vorzugsweise befindet sie sich an einer Achse (16) und ist hier über eine Halterung (21) befestigt. Der Bremsaktuator (23) ist z.B. in Fahrt- oder Zugrichtung hinter der Achse (16) angeordnet. Der Bremsaktuator (23) kann zusammen mit der Steuerung (24) in einer Baugruppe integriert sein. Er kann alternativ getrennt von der Steuerung (24) angeordnet sein.

Im Rahmen der vorliegenden Erfindung wird unter einer mechanisch überlagernden Bremsbetätigung eine solche Bremsbetätigung verstanden, die innerhalb des Kraftflusses einer Basis-Betätigung zu einer oder mehreren Radbremsen (14) an zumindest einem Teil der Kraftleitungsmittel zu den Radebremsen (14) angreift und eine zusätzliche Zug- oder Druckkraft oder eine zusätzliche Stellbewegung aufbringt. Nachfolgend wird ein überlagernder mechanischer Eingriff an einem Festkörper-Kraftleitungsmittel (Bremsstange / Bremskabel o. Bremsseil / Waagbalken etc.) im Detail erläutert. Alternativ oder zusätzlich kann ein überlagernder mechanischer Eingriff an einem fluidischen Kraftleitungsmittel (Hydrauliköl / Presstempel etc.) vorgesehen sein.

Der Bremsaktuator (23) kann beliebig ausgebildet sein. Im gezeigten Beispiel ist ein Bremsaktuator (23) zur zentralen Betätigung von zwei oder mehr Radbremsen (14) über ein zentrales Steuermittel (26) dargestellt. Der Bremsaktuator (24) weist bevorzugt einen steuerbaren Antrieb, z.B. einen Elektromotor oder einen fluidischen Zylinder, mit einem Steuermittel oder Stellmittel (26), z.B. einer Schubstange auf, das von hinten gegen den Waagbalken (19) drückt und dabei die dort eingehängten Bremskabel (22) betätigt und anzieht. Dieses Einwirken erfolgt gesteuert oder geregelt und in Abhängigkeit von den mittels einer Sensorik detektierten kritischen Fahrzuständen, z.B. Schlingerbewegungen. Bei Abklingen oder Beendigung der Schlingererscheinungen kann der Eingriff des Bremsaktuator (23) reduziert oder deaktiviert werden, wobei die Federn in den Radbremsen (14) die Bremskabel (22) und den Waagbalken (19) in die Ausgangsstellung bewegen.

Die Stabilisierungseinrichtung (3) kann unabhängig von der Betriebsbremse (6) bzw. dem Basis-Bremssystem agieren. Die Stabilisierungs-Bremsaktionen können der normalen Betriebsbremse (6) überlagert werden, ohne dass diese dabei betätigt wird.

Die Stabilisierungseinrichtung (3) ist mit einer Energieversorgung, insbesondere Stromversorgung, des Fahrzeuganhängers (1) verbunden. Die Energie kann in Fahrt von einem Zugfahrzeug über das Stromkabel oder im Stand über eine externe Leitung zugeführt werden. Ferner kann ein Energiespeicher (27), insbesondere eine Batterie oder ein Akku vorhanden sein. Die Energieversorgung kann auch eine Fluidversorgung, z.B. mit Hydrauliköl, für den Betrieb eines fluidischen, insbesondere hydraulischen, Bremsaktuators (23) beinhalten.

Figur 2 zeigt den Bremsaktuator (23) in vergrößerter Darstellung. Das Steuermittel (26) ist hier beispielhaft als Schubstange ausgebildet. Bei einer translatorischen Verschiebung des Steuermittels (26) (in der Zeichnung nach links) wird der Mitnehmer (20) in der Anzugrichtung für die Radbremsen (14) bewegt. Durch die Verschiebung des Mitnehmers wird gemäß der oben erläuterten Wirkungsweise der Waagbalken (19) bewegt, sodass die Bremskabel (22) angezogen werden.

Das Steuermittel (26) greift in beliebiger Weise überlagernd zu dem Bremsgestänge (17) an dem Mitnehmer (20) an. In dem gezeigten Beispiel bildet das rückseitige Ende des Bremsgestänges (17) einen ersten Anlagekontakt zu dem Mitnehmer (20) und ist in einer Bohrung oder Ausnehmung in der Schubstange (26) geführt. Das ringförmige Ende der Schubstange (26) bildet einen zweiten Anlagekontakt zu dem Mitnehmer (20). Somit können eine Bewegung der Schubstange (26) und eine Bewegung des Bremsgestänges (26) jeweils einzeln oder in Kombination eine Bewegung des Waagbalkens (19) bewirken, um zumindest eine Radbremse (14) mechanisch zu betätigen. Die Schubstange (26) und das Bremsgestänge (17) beeinflussen sich aber ansonsten nicht gegenseitig.

Gemäß einer nicht dargestellten alternativen Ausführung kann ein bewegliches Steuermittel an einer Führung oder Abstützung von Bremsstange, Bremskabel o. Bremsseil oder Waagbalken angreifen. Es ist insbesondere möglich, durch das Stellmittel einen Teil der Halterung (21) und/oder eine Abstützung des Bowdenzugs / Bremskabels (22) zu verschieben, was ebenfalls zu einer überlagernden mechanischen Aufbringung einer Bremskraft führt. Wiederum alternativ kann durch ein Steuermittel eine Verlängerung oder Verkürzung der wirksamen Länge eines Kraftleitungsmittels (bspw. Bremsstange oder Bremsseil) oder der wirksamen Stützlänge eines Führungsmittels für ein Kraftleitungsmittel erfolgen. Beispielsweise kann durch ein Steuermittel eine Verkürzung oder Verlängerung der Stützhülle des Bowdenzugs (22) hervorgerufen werden, z.B. indem zwei sich überlappende Abschnitte oder Teile der Stützhülle, in denen das Bremsseil geführt ist, relativ zueinander bewegt werden, sodass sich die Überlappungslänge verkürzt oder verlängert.

Der Bremsaktuator (23) kann in beliebiger Weise am Fahrzeuganhänger (1) befestigt sein. In dem gezeigten Beispiel ist er gemeinsam mit den Bowdenzügen (22) an den Halterungen (21) gegenüber dem Fahrzeuganhänger (1) abgestützt, insbesondere gegenüber der Achse (16) oder einem Querträger.

Das gezeigte Stabilisierungssystem umfasst eine Steuereinheit (24), die bevorzugt als elektronische Steuereinheit ausgebildet ist. Sie umfasst eine Datenverarbeitungseinrichtung und ist dazu ausgebildet den Bremsaktuator (23) und somit das Steuermittel (26) zu betätigen. Alternativ oder zusätzlich kann die Steuereinheit mit einer Verarbeitungseinrichtung (29) der Erfassungseinrichtung (2) verbunden sein. Die Steuereinheit (24) kann in den Bremsaktuator (23) integriert sein. Alternativ kann die Steuereinheit (24) separat vorliegen und mit dem Bremsaktuator (23) oder mehreren Bremsaktuatoren (23) verbunden sein.

Die Stabilisierungseinrichtung (3) beinhaltet eine Sensorik zur Detektion von kritischen Fahrzuständen, z.B. Schlingerbewegungen. Diese Sensorik kann als Schlingersensorik oder Fahrzustandsüberwachungs-Sensorik bezeichnet werden. Die Stabilisierungseinrichtung (3) oder eine separat angeordnete Erfassungseinrichtung (2) umfasst weiterhin eine Lasterfassungs-Sensorik (G1-G3). Die Lasterfassungs-Sensorik kann beliebig ausgebildet sein. Nachfolgend im Detail beschriebene Ausführungen der Lasterfassungs-Sensorik stellen eigenständige Aspekte der vorliegenden Erfindung dar, die für sich allein oder in Kombination mit dem Stabilisierungssystem verwendbar sind.

In dem Beispiel von Figur 1 umfasst das Stabilisierungssystem bzw. die Erfassungseinrichtung (2) drei Sensoren (G1, G2, G3) zur Ermittlung der momentanen Masse und/oder Beladung des Fahrzeuganhängers (1). In der gezeigten Ausführungsvariante sind die Sensoren (G1 bis G3) als Gewichtssensoren ausgebildet. Ein erster und ein zweiter Gewichtssensor (G1, G2) sind an je einem Achslager (15) angeordnet, wo sie insbesondere die zwischen dem Anhängerchassis und der Achse (16) übertragene Kraft (Gewichtskraft) in vertikaler Richtung erfassen. Ein dritter Gewichtssensor (G3) ist im Bereich der Zugdeichsel und insbesondere im Bereich der Anhängerkupplung (11) angeordnet, wo er die Auflagekraft (Gewichtskraft) in vertikaler Richtung zwischen dem Anhängerchassis und dem Zugfahrzeug erfasst. Aus der Summe der Messwerte dieser Gewichtssensoren (G1 bis G3) kann die Gesamtmasse des Fahrzeuganhängers (1) ermittelt werden.

Alternativ oder zusätzlich kann ein Gewichtssensor (G3) eine Auflagekraft in vertikaler Richtung zwischen dem Anhängerchassis und dem Bugrad (12) oder in sonstiger Weise eine Aufstandskraft im Bereich des Bugrads (12) erfassen, solange der Fahrzeuganhänger (1) nicht mit einem Zugfahrzeug verbunden ist.

Aus einer Differenz bzw. einem Verhältnis der gemessenen Gewichtskräfte an dem ersten und dem zweiten Gewichtssensor (G1, G2) kann eine Schwerpunktlage des Fahrzeuganhängers (1) quer zur Fahrtrichtung geschätzt oder errechnet werden. Aus einem Vergleich der Summe der Messwerte des ersten und des zweiten Gewichtssensors (G1, G2) einerseits mit dem Messwert des dritten Gewichtssensors (G3) andererseits kann eine Schwerpunktlage des Fahrzeuganhängers (1) in der Längsrichtung geschätzt oder errechnet werden.

Die Stabilisierungssystem bzw. die Erfassungseinrichtung (2) kann dabei die Masse bzw. das Gewicht im Stand des Fahrzeuganhängers (1) erfassen. Dies kann vor Fahrbeginn erfolgen, so dass die erfassten Werte von Masse bzw. Gewicht bereits vor einer im Fahrbetrieb erstmaligen Betätigung bzw. Aktivierung der Stabilisierungseinrichtung (3) vorliegen und für deren Funktion und/oder ggf. für andere Zwecke verwendet werden können. Außerdem kann eine Massen- bzw. Gewichtserfassung auch während der Fahrt des Fahrzeuganhängers (1) erfolgen. Die Erfassung kann kontinuierlich oder intermittierend geschehen.

Das Stabilisierungssystem bzw. die Stabilisierungseinrichtung (3) umfasst bevorzugt mindestens einen Beschleunigungssensor (25) (ESP-Sensor), der beispielsweise in dem Bremsaktuator (23) integriert oder mit diesem bzw. mit der Steuerungsvorrichtung (27) verbunden ist. Der Beschleunigungssensor (25) erfasst bevorzugt zumindest eine Rotationsgeschwindigkeit und/oder Rotationsbeschleunigung des Fahrzeuganhängers (1) um die Hochachse (Gieren).

Darüber hinaus kann der Beschleunigungssensor (25) weitere Rotationsgeschwindigkeiten und/oder Rotationsbeschleunigungen um die Längsachse oder die Querachse des Fahrzeuganhängers (1) erfassen (Nicken und Wanken) .

Ferner kann der Beschleunigungssensor (25) eine translatorische Geschwindigkeit oder Beschleunigung in der Längsrichtung und/oder in der Querrichtung des Fahrzeuganhängers (1) erfassen.

Wiederum alternativ können zwei oder mehr Beschleunigungssensoren (25) zur Erfassung einer oder mehrerer der vorgenannten Bewegungsparameter vorgesehen sein.

Das Stabilisierungssystem bzw. die Erfassungseinrichtung (2) ist gemäß einer Ausführungsvariante dazu ausgebildet, die Masse und/oder Beladung des Fahrzeuganhängers (1) zumindest teilweise indirekt zu erfassen, insbesondere durch einen Vergleich von gemessenen Kräften auf den Fahrzeuganhänger und den damit verbundenen Beschleunigungen in bzw. um eine oder mehrere Richtungen.

Alternativ oder zusätzlich zu dem dritten Gewichtssensor (G3) kann das Stabilisierungssystem bzw. die Erfassungseinrichtung (2) einen Kraftsensor zur Erfassung von Kontaktkräften zwischen dem Zugfahrzeug und dem Fahrzeuganhänger (1) in horizontaler Richtung aufweisen. Ein solcher Kraftsensor kann insbesondere im Bereich der Anhängekupplung (11) bzw. der Zugdeichsel angeordnet sein.

Das Stabilisierungssystem bzw. die Erfassungseinrichtung (2) ist bevorzugt dazu ausgebildet, eine Masse und/oder Beladung des Fahrzeuganhängers (1) durch einen Vergleich zwischen den oben genannten Bewegungs-Parametern mit den ein oder mehreren sensorisch erfassen Kräften zu ermitteln. Nachfolgend werden beispielhaft einige der möglichen Ermittlungen erläutert. Diese basieren auf den Grundsätzen der Mechanik und Dynamik, die dem Fachmann geläufig sind.

Aus einem Vergleich der Kraftverläufe an dem ersten und dem zweiten Gewichtssensor (G1, G2), die auf der linken und rechten Seite des Fahrzeuganhängers platziert sind, mit einem Verlauf der Rotationsbeschleunigung um die Längsachse des Fahrzeuganhängers (1) kann ein Trägheitsmoment des Fahrzeuganhängers (1) (inklusive Last) um die Längsachse ermittelt werden. Darüber hinaus kann eine horizontale Lage, d.h. Höhe des Schwerpunkts des Fahrzeuganhängers (1) (inklusive Last) aus dem vorgenannten Vergleich ermittelt werden, wenn die Gesamtmasse des Fahrzeuganhängers (1) bekannt ist (siehe oben) .

Alternativ oder zusätzlich kann aus einem Vergleich der Kraftverläufe an dem dritten Gewichtssensor (G3) einerseits und an dem ersten und zweiten Gewichtssensor (G1, G2) andererseits mit einem Verlauf der Rotationsbeschleunigung um die Querachse des Fahrzeuganhängers (1) (Nicken) ein Trägheitsmoment des Fahrzeuganhängers (1) um die Querachse ermittelt werden. Ferner kann aus diesem Vergleich die vertikale Lage des Schwerpunktes des Fahrzeuganhängers ermittelt werden.

Das Stabilisierungssystem (3) bzw. der Bremsaktuator (23) umfasst bevorzugt einen eigenen Energiespeicher (27). Dies kann insbesondere ein elektrischer Akkumulator sein. Eine Aufladung des Energiespeichers (27) erfolgt bevorzugt während des Zugbetriebs über einen Versorgungsstromkreis des Zugfahrzeugs. Der Fahrzeuganhänger (1) weist hierfür bevorzugt eine Stromleitung (28) zur Energieversorgung des Bremsaktuators (23) bzw. des dort angeordneten Energiespeichers (27) auf. Alternativ kann der Bremsaktuator (23) direkt über eine Stromleitung (28) von dem Zugfahrzeug versorgt sein.

Bei einer niedrigen erfassten Masse bzw. Gewicht kann die anfängliche Bremskraft an den Radbremsen (14) auf einen niedrigen Wert gesteuert werden, so dass der Bremsaktuator (23) nicht mit der maximal möglichen Kraft zu bremsen beginnt. Andererseits kann auch im weiteren Bremsverlauf eine obere maximale Bremskraft vorgegeben werden. In diesem Kraftfenster kann der Bremsaktuator (23) zwar die anfängliche Bremskraft erhöhen, falls der kritische Fahrzustand nicht oder nicht schnell genug reduziert oder beseitigt werden kann. Ein Überschreiten der massenabhängigen Maximalkraftgrenze nach oben wird jedoch zuverlässig vermieden. Mit den vorgegebenen Kraft-Grenzwerten kann auch die Lage und Größe des zur Stabilisierung verfügbaren Kraftfensters definiert werden.

Bei hohen erfassten Massen bzw. Gewichten, wie sie z.B. bei voll beladenen Nutzanhängern vorkommen, kann ein Kraft-Grenzwert hoch angesetzt werden oder kann ggf. auch entfallen. Bei Nutzanhängern mit sehr großen Unterschieden zwischen Leergewicht und zulässigem Gesamtgewicht kann die Kraftbegrenzung besondere Bedeutung haben, weil die auf das hohe Maximalgewicht ausgelegte maximale Bremskraft für einen leeren Nutzanhänger zu hoch wäre und zu einem Überbremsen sowie einer Verschlechterung des kritischen Fahrzustands führen würde.

Nachfolgend wird eine bevorzugte Ausführungsvariante einer Sensorik für die Lasterfassung erläutert, die einen eigenständigen Aspekt der vorliegenden Erfindung darstellt.

Die Erfassungseinrichtung (2) weist eine lasterfassende Sensorik (123, 126, 127) am Fahrzeuganhänger (1) auf. Die Sensorik (123, 126, 127) kann unterschiedlich ausgebildet und/oder an unterschiedlichen Stellen und/oder mehrfach vorhanden sein. Die Erfassungseinrichtung (2), insbesondere eine oder mehrere Sensoriken (123, 126, 127) können eine Signaleinrichtung (131) zur Signalübertragung aufweisen, die drahtgebunden und/oder bevorzugt drahtlos erfolgen kann. Die Sensorik (123, 126, 127) weist jeweils einen oder mehrere Sensoren auf und kann auch eine Verarbeitungseinrichtung (29) für die Sensorsignale beinhalten. Die Verarbeitungseinrichtung kann alternativ und bevorzugt in der Steuerung (24) der Stabilisierungseinrichtung (3) angeordnet sein. Über die Signaleinrichtung (131) werden die Sensorsignale oder die Verarbeitungssignale kommuniziert. Die Kommunikation kann dabei jeweils mit der Steuerung (24) erfolgen, die den Bremsaktuator (23) steuert oder regelt.

Eine Sensorik (123) ist bevorzugt im Bereich eines Fahrzeugrads (114) angeordnet. Sie befindet sich dabei insbesondere im Bereich einer Radlagerung (115). Hierbei gibt es mehrere Anordnungsmöglichkeiten am Fahrzeugrad (114) bzw. an der Radlagerung (115). In den gezeigten und bevorzugten Ausführungsbeispielen ist die Sensorik (123) im Bereich eines Achszapfens (116) angeordnet.

Die Sensorik (123) kann einzeln oder mehrfach vorhanden sein. Sie kann sich an einem oder mehreren Fahrzeugrädern (114) bzw. den genannten Stellen befinden. Eine beidseitige Anordnung an den Rädern (114) einer Achse (16) ist vorteilhaft, um durch einen Vergleich der Sensorsignale weitere Erkenntnisse über eine Massenverteilung, insbesondere eine Schwerpunktlage in Seitenrichtung des Fahrzeuganhängers (1) gewinnen zu können. Wenn eine oder mehrere Sensoriken (123) an mehreren Achsen (16) angeordnet sind, können auch Differenzen in Längsrichtung (145) und axiale Schwerpunktverlagerungen bzw. Massen- oder Lastverteilungen detektiert werden.

Die Sensorik (123) kann in unterschiedlicher Weise ausgebildet sein und wirken. Vorzugsweise erfasst sie die Biegeverformungen des zugeordneten Achszapfens (116). Die Sensorik (123) kann dabei an einer oder an zwei oder mehr über die Zapfenlänge verteilten diskreten Stellen messen. Die diskreten Messstellen sind voneinander getrennt und axial distanziert. Die Sensorik (123) kann einen oder mehrere Sensoren (124, 125) aufweisen, die am Achszapfen (116) oder in dessen Umgebung angeordnet sind. Bei einer Mehrfachanordnung können die Sensoren (124, 125) gleichartig oder unterschiedlich ausgebildet sein.

Aus der lokalen Biegeverformung kann unter Kompensation anderer Einflüsse eine vertikale Kraft berechnet werden, welche den hier wirkenden Masse- oder Gewichtsanteil repräsentiert. Aus mehreren beidseitig am Fahrzeuganhänger (1) angeordneten Sensoriken (123) kann die Gesamtmasse bzw. das Gesamtgewicht ermittelt werden.

In einer Ausführungsform weist ein Sensor (124) einen oder mehrere Dehnmessstreifen am Achszapfen (116) auf. Figur 4 zeigt diese Anordnung. Der Dehnmessstreifen (124) ist bevorzugt als laserstrukturierter Dehnmessstreifen direkt auf dem Zapfenmantel ausgebildet. Er ist dadurch unverlierbar und funktionssicher. Der Sensor (124) kann sich an einem abgestuften Zapfenbereich zwischen dem Kompaktlager und einem hinteren und am Bremsschild anliegenden Zapfenbund befinden. Der Sensor (124) beinhaltet außerdem eine zum Dehnmessstreifen gehörige elektrische Schaltung, die ebenfalls am Achszapfen (116) oder an anderer Stelle, insbesondere am Bremsschild, angeordnet sein kann. Figur 5 zeigt schematisch diese Anordnung.

In einer anderen Variante ist ein Sensor (125) als magnetostriktiver Aufnehmer ausgebildet und in Figur 5 ebenfalls schematisch angedeutet. Hierbei werden unter Nutzung des Villari-Effekts Biegeverformungen eines magnetostriktiven Materials in einem umgebenden Magnetfeld als Feldänderungen aufgenommen und evaluiert. Der Sensor (125) kann ebenfalls in dem abgestuften Zapfenbereich zwischen dem Kompaktlager und dem rückwärtigen Bund des Achszapfens (116) angeordnet sein.

Der Sensor (125) kann z.B. ein magnetostriktives Material, z.B. eine FeAl-Legierung (Eisen-Aluminium) aufweisen, die im besagten Messbereich am Achszapfen (116) als separater Messgeber angeordnet ist oder aus welcher der Achszapfen (116) zumindest im Messbereich besteht. Ferner umfasst der Sensor (125) noch ein oder mehrere Magnetfelderzeuger, die von ein oder mehreren Permanentmagneten und/oder ein oder mehreren Spulen gebildet sein können. Zudem gehört zum Sensor (125) noch eine Messeinrichtung für das Magnetfeld und dessen Veränderungen.

Die Sensoren (124, 125) können in der vorerwähnten Weise eine Verarbeitungseinrichtung beinhalten, welche die Sensorsignale auswertet und hieraus eine Kraft ermittelt, welche die lokal wirkende Masse bzw. das Gewicht repräsentiert. Die Verarbeitungseinrichtung kann alternativ in der Steuerung (24) angeordnet sein. Der oder die Sensoren (124, 125) beinhalten eine Kommunikationseinheit der besagten Signaleinrichtung (131), z.B. eine drahtlose uni-direktionale Sendeeinheit oder eine bi-direktionale Sende-/Empfangseinheit. Die Kommunikation kann z.B. per Funk, insbesondere durch Bluetooth, oder in anderer geeigneter Weise erfolgen.

Eine andere Sensorik (126) kann im Bereich einer Achse (16) angeordnet sein. Sie kann sich insbesondere an einer Achslagerung (112) befinden, z.B. an der Verbindungsstelle zwischen einem Achsbock und einem Längsträger des Fahrgestells (4). Die Sensorik (126) kann einen oder mehrere kraftmessende Sensoren (G1, G2), z.B. Druckmessdosen, Dehnmessstreifen oder dergleichen aufweisen. Eine Sensorik (126) kann an einer oder beiden Achslagerungen (112) und gegebenenfalls auch an mehreren Achsen (16) angeordnet sein. Ferner kann eine Sensorik (126) auch an einer anderen Stelle einer Achse (16), z.B. am Achskörper (110) angeordnet sein.

Die Erfassungseinrichtung (2) kann eine oder mehrere der vorgenannten Sensoriken (123, 126, 217)in beliebiger Zahl und Kombination beinhalten. Vorzugweise weist sie zumindest eine radseitige Sensorik (123) in Einzel- oder Mehrfachanordnung und gegebenenfalls ein oder mehrere weitere Sensoriken (126, 127) auf.

Abwandlungen der Erfindung sind in verschiedener Weise möglich. Alle zu den Ausführungsbeispielen beschriebenen, gezeigten, beanspruchten oder in sonstiger Weise offenbarten Merkmale können in beliebiger Weise miteinander kombiniert, gegeneinander ersetzt, ergänzt oder weggelassen werden.

Die Stabilisierungseinrichtung (3), insbesondere die Erfassungseinrichtung (2) und/oder die Steuerung (24), ist mit einer Anzeige (32) verbindbar bzw. verbunden. Eine Anzeige (32) kann am Fahrzeuganhänger (1), insbesondere an einer einsehbaren Stelle am Fahrgestell (4) und/oder an einem Aufbau angeordnet sein. Eine alternative oder zusätzliche fahrzeugexterne Anzeige (32) kann außerhalb des Fahrzeuganhängers (1) angeordnet sein. Eine solche fahrzeugexterne Anzeige kann z.B. mobil oder stationär angeordnet sein. Eine mobile Anzeige kann an einem beweglichen Anzeigegerät, z.B. einem Smartphone, Tablet oder dgl., ausgebildet sein. Sie kann mittels einer App realisiert und betrieben werden. In einer alternativen oder zusätzlichen Ausführung kann eine fahrzeugexterne Anzeige an oder in einem Zugfahrzeug realisiert werden, z.B. an der Instrumententafel.

Die Anzeigen (32) können optisch und/oder akustisch oder in anderer Weise funktionieren. Sie können einen Monitor oder ein anderes optisches Anzeigemittel beinhalten. Eine akustische Anzeige ist über einen Lautsprecher oder dergleichen möglich. Beim Anzeigegerät und bei einem Zugfahrzeug können vorhandene Anzeigemittel mit einer entsprechenden Ansteuerung benutzt werden.

Die Kommunikation zwischen der Stabilisierungseinrichtung (3) und der oder den Anzeigen (32) erfolgt mittels einer bevorzugt drahtlosen Kommunikationseinrichtung (29, 35), die je nach Anzeige (32) auch alternativ oder zusätzlich drahtgebunden funktionieren kann. Hierfür weisen die Anzeige(n) (32) eine Kommunikationseinheit, z.B. einen Empfänger, und die Erfassungseinrichtung (2) und/oder die Steuerung (24) eine Kommunikationseinheit (29) auf.

Die Stabilisierungseinrichtung (3) bzw. die Erfassungseinrichtung (2) kann außerdem mit einem oder mehreren weiteren Sensoren verbunden sein, die andere Zustände von Komponenten des Fahrzeuganhängers (1) und/oder seiner Umgebung erfassen. Dies können z.B. Sensoren zur Detektion des Reifendrucks, des Bremsbelag-Verschleißes, der Bremsentemperatur, der Einraststellung der Anhängerkupplung (11), der Parkstützen oder dgl. sein. Ferner kann der Einzug des Bugrades (12) oder die Einstecklage von Unterlegkeilen oder dgl. sensorisch erfasst werden. Ein Umgebungssensor kann z.B. ein Parksensor am Fahrzeugheck und/oder an den Fahrzeugseiten oder eine Rückfahrkamera oder dgl. sein. Die durch diese weiteren Sensoren erfassten Zustände können ausgewertet werden, bspw. um einen Verkehrssicherheitszustand zu erfassen. Ein oder mehrere von diesen weiteren Sensoren erfasste Werte und/oder ein Verkehrssicherheitszustand können an den ein oder mehreren Anzeigen (32) mitgeteilt werden. Sie können weiterhin genutzt werden, um Sicherungsmaßnahmen am Fahrzeuganhänger (1) bzw. an der Stabilisierungseinrichtung (3) vorzunehmen. Beispielsweise kann der Eingriff der Stabilisierungseinrichtung (3) bzw. des Bremsaktuators in Abhängigkeit von einem erfassten Reifendruck, einem erfassten Bremsbelag-Verschleiß, einer Bremstemperatur oder einer der vorgenannten Einraststellungen gesteuert werden. Bei ist es insbesondere möglich, einen Bremseingriff zu reduzieren oder eine Aktivierung des Bremsaktuators (23) bzw. einen bedarfsgerechten Eingriff der Stabilisierungseinrichtung (3) vorzunehmen oder einen sonst etwaig gefährlichen Eingriff zu vermeiden, wenn ein unzulässiger Verkehrssicherheitszustand festgestellt wird. Ein solcher Zustand kein sein:
- Unzulässiger Reifendruck (zu hoch, zu niedrig);
- Unzulässige Änderung des Reifendrucks (rapider Abfall / rapider Anstieg);
- Unzulässiger Bewegungszustand (Anhängerkupplung nicht eingerastet, aber Fahrbewegung / Schlingerzustand detektiert);
- Unzulässiger Bremsbelag-Verschleiß;
- Unzulässige Bremstemperatur.

Der Bremsaktuator (23) kann ggf. mehrfach vorhanden sein und eine andere Ausbildung haben. Beispielsweise kann der in Figur 2 dargestellte Bremsaktuator (23) anstelle einer einzelnen zentralen Schubstange (26) zwei separate Schubstangen aufweisen, die jeweils einzeln eines der Bremsseile (22) betätigen. Alternativ können zwei oder mehr Bremsaktuatoren (23) vorgesehen sein, die jeweils eine Radbremse (14) separat betätigen.

Bei einem mehrachsigen Fahrzeuganhänger (1) kann ggf. für jede Achse (16) ein separater Bremsaktuator (23) vorgesehen sein.

Gemäß einer bevorzugten Ausführungsvariante ist für jede Radbremse (14) des Fahrzeuganhängers (1) oder zumindest jeweils für die zwei oder mehr Radbremsen (14) auf jeder Seite des Fahrzeuganhängers (1) (links/rechts) eine separate überlagernde mechanische Bremsbetätigung durch das Stabilisierungssystem vorgesehen, insbesondere ein separater Bremsaktuator (23).

Wenn mehrere Bremsaktuatoren (23) vorliegen, können diese jeweils eine separate oder eine gemeinsame Energieversorgung (27) sowie jeweils eine separate oder eine gemeinsame Steuerungseinheit (24) aufweisen.

Die momentane Masse und/oder Beladung kann gemäß einer ersten Ausführungsvariante einmalig vor oder bei einem Fahrtbeginn ermittelt werden. Alternativ oder zusätzlich kann die momentane Masse und/oder Beladung während einer Fahrt und vor einem Bremseingriff ermittelt werden.

Ein Aspekt der vorliegenden Erfindung, der in beliebiger Weise mit allen vorgenannten Aspekten kombinierbar ist, sieht vor, dass eine Verteilung der Last des Fahrzeuganhängers (1) und/oder eine Schwerpunktlage des Fahrzeuganhängers längs und/oder quer zur Fahrtrichtung ermittelt werden.

Ein weiterer Aspekt der vorliegenden Erfindung, der in beliebiger Weise mit allen vorgenannten Aspekten kombinierbar ist, sieht vor, dass eine vertikale Höhe des Schwerpunktes des Fahrzeuganhängers (1) ermittelt wird. Im Rahmen der offenbarten Stabilisierungstechnik ist bevorzugt vorgesehen, dass die momentane Masse und/oder Beladung des Fahrzeuganhängers mit einem oder mehreren Zustandserkennungs-Grenzwerten verglichen werden, um einen momentanen Beladungs-Zustand des Fahrzeuganhängers zu identifizieren.

Unabhängig von oder in Kombination mit dem vorgenannten Aspekt kann vorgesehen sein, die Betätigung des Bremsaktuators (23) in Abhängigkeit von einem identifizierten Beladungs-Zustand des Fahrzeuganhängers (1) zu steuern.

Die Stabilisierungstechnik kann abweichend von den bevorzugten Ausführungen ausgebildet sein. Die verschiedenen Komponenten der Stabilisierungseinrichtung, insbesondere die Sensorik, die Steuerung und der hiervon beaufschlagte Bremsaktuator zur Stabilisierung des erfassten kritischen Fahrzustands können gemeinsam am Fahrzeuganhäger (1) angeordnet sein. Alternativ ist eine verteilte Anordnung am Fahrzeuganhänger (1) oder eine Auslagerung von Teilkomponenten auf ein Zugfahrzeug möglich. Der Bremsaktuator kann eine anderweitige Bremseinrichtung des Fahrzeuganhängers überlagern. Letztere kann eine Betriebsbremse, insbesondere eine Auflaufbremse, sein. Andererseits können Teile der Stabilisierungseinrichtung im Zugfahrzeug angeordnet sein. Insbesondere können die Steuerung und gegebenenfalls auch der Bremsaktuator im Zugfahrzeug angeordnet sein. Für die konstruktive Ausgestaltung des Bremsaktuators und für dessen Anordnung sind ebenfalls eine Vielzahl von unterschiedlichen Ausbildungsmöglichkeiten vorhanden.

Gemäß einem eigenständigen Aspekt der vorliegenden Erfindung kann eine Sensorik zur Lasterfassung im Bereich eines Fahrzeugrads (114) angeordnet sein, insbesondere an oder in einer Radlagerung (115). Die Sensorik kann besonders bevorzugt im Bereich eines Achszapfens (116) angeordnet sein.

### BEZUGSZEICHENLISTE

- 1: Fahrzeuganhänger
- 2: Erfassungseinrichtung
- 3: Stabilisierungseinrichtung / Schlingerbremseinrichtung
- 4: Fahrgestell
- 6: Basis-Bremssystem / Betriebsbremse
- 11: Anhängekupplung
- 12: Bugrad
- 13: Anhängerrad
- 14: Radbremse mit mechanischer Betätigung
- 15: Achslager / Achsausleger
- 16: Achse
- 17: Bremszug / Bremsgestänge
- 18: Auflaufeinrichtung
- 19: Waagbalken
- 20: Mitnehmer
- 21: Halterung
- 22: Bremskabel / Bowdenzug
- 23: Bremsaktuator
- 24: Steuerungseinheit / Steuerung
- 25: Beschleunigungssensor / ESP-Sensor
- 26: Steuermittel / Schubstange
- 27: Energiespeicher
- 28: Stromleitung / Energieversorgung
- 29: Kommunikationseinrichtung / Verarbeitungseinrichtung
- 32: Anzeige
- 35: Kommunikationseinrichtung
- 110: Achskörper
- 111: Federung
- 112: Achslagerung
- 113: Radlenker
- 114: Rad / Anhängerrad
- 115: Radlagerung
- 116: Achszapfen / Achsstummel
- 123: Sensorik / Lasterfassung am Rad
- 124: Sensor / Dehnmessstreifen
- 125: Sensor / Magnetostriktiver Aufnehmer
- 126: Sensorik / Lasterfassung an Achse
- 127: Sensorik / Lasterfassung an Deichsel
- 131: Signaleinrichtung
- 145: Zentrale Längsachse

- G1: Gewichtssensor
- G2: Gewichtssensor
- G3: Gewichtssensor

## Patentansprüche

1. Stabilisierungssystem für einen Fahrzeuganhänger (1) umfassend
- einen Bremsaktuator (23) zur überlagernden mechanischen Betätigung mindestens einer Anhängerbremse (14) unter Überlagerung einer Basis-Betätigung durch eine Auflaufeinrichtung (18), wobei die Basis-Betätigung in Form einer Zugkraft oder Druckkraft ausgebildet ist, die über ein mechanisches Kraftleitungsmittel an die Betätigungselemente der Radbremsen geleitet wird, und wobei die überlagerte Betätigung der Anhängerbremse (14) durch mechanische Betätigungskräfte oder mechanische Stellbewegungen bewirkt wird, die von dem Bremsaktuator (23) aufgebracht werden;
- eine Steuerungseinheit (24) zur Betätigung des Bremsaktuators (23) in Abhängigkeit von einem sensorisch erfassten Bewegungszustand des Fahrzeuganhängers (1) zur Vermeidung oder Begrenzung von instabilen Fahrzuständen;
- wobei das Stabilisierungssystem einen Beschleunigungssensor zur Erfassung von Bewegungs-Parametern umfasst, durch die ein instabiler Fahrzustand erkennbar ist;
**dadurch gekennzeichnet, dass** das Stabilisierungssystem einen oder mehrere Sensoren (G1, G2, G3) zur Erfassung der momentanen Masse und/oder Beladung des Fahrzeuganhängers (1) aufweist und dazu ausgebildet ist, die Betätigung des Bremsaktuators (23) in Abhängigkeit von der momentanen Masse und/oder Beladung des Fahrzeuganhängers (1) zu steuern, und dass
- zur Erfassung der momentanen Masse und/oder Beladung des Fahrzeuganhängers (1) die Masse und/oder Beladung des Fahrzeuganhängers einmalig vor oder bei einem Fahrtbeginn oder nur gelegentlich während der Fahrt erfasst wird; UND/ODER dass
- das Stabilisierungssystem zwei oder mehr vordefinierte Sätze an Grenzwerten zur Beschränkung oder Steuerung der Bremsaktuator-Betätigung aufweist, wobei das Stabilisierungssystem dazu ausgebildet ist, einen geeigneten Grenzwertsatz in Abhängigkeit von der erfassten momentanen Masse und/oder Beladung des Fahrzeuganhängers auszuwählen.

2. Stabilisierungssystem nach Anspruch 1, **dadurch gekennzeichnet, dass** das Stabilisierungssystem dazu ausgebildet ist, eine absolute Masse des Fahrzeuganhängers (1) zu ermitteln und/oder eine Schwerpunktlage des Fahrzeuganhängers (1) und/oder der Last zu ermitteln und/oder ein Trägheitsmoment des Fahrzeuganhängers (1) zu ermitteln.

3. Stabilisierungssystem nach einem der vorhergehenden Ansprüche, **dadurch gekennzeichnet, dass** das Stabilisierungssystem dazu ausgebildet ist, in Abhängigkeit von der ermittelten momentanen Masse und/oder Beladung des Fahrzeuganhängers (1) das Ansprechverhalten des Bremsaktuators (23) zu adaptieren, insbesondere einen oder mehrere Auslöse-Grenzwerte für das Auslösen eines überlagerten Bremseingriffs zu verändern.

4. Stabilisierungssystem nach einem der vorhergehenden Ansprüche, **dadurch gekennzeichnet, dass** das Stabilisierungssystem dazu ausgebildet ist, in Abhängigkeit von der ermittelten momentanen Masse und/oder Beladung des Fahrzeuganhängers (1) die Intensität eines Bremseingriffs zu verändern, insbesondere einen Kraftbeschränkungs-Grenzwert für die Begrenzung des Bremseingriffs vorzusehen oder zu adaptieren.

5. Stabilisierungssystem nach einem der vorhergehenden Ansprüche, **dadurch gekennzeichnet, dass** das Stabilisierungssystem dazu ausgebildet ist, in Abhängigkeit von der ermittelten momentanen Masse und/oder Beladung des Fahrzeuganhängers die Dynamik eines Bremseingriffs zu beschränken, insbesondere einen Dynamikbeschränkungs-Grenzwert vorzusehen oder zu adaptieren.

6. Stabilisierungssystem nach einem der vorhergehenden Ansprüche, **dadurch gekennzeichnet, dass** die momentane Masse und/oder Beladung des Fahrzeuganhängers (1) zeitlich vor einem Bremseingriff ermittelt wird.

7. Stabilisierungssystem nach einem der vorhergehenden Ansprüche, **dadurch gekennzeichnet, dass** die Masse und/oder Beladung des Fahrzeuganhängers (1) direkt erfasst wird, insbesondere durch einen oder mehrere Gewichtssensoren (G1, G2, G3), oder dass die Masse und/oder Beladung des Fahrzeuganhängers (1) indirekt erfasst wird, insbesondere durch einen Vergleich der Messergebnisse eines oder mehrerer Kraft- oder Gewichtssensoren (G1, G2, G3) mit den Messergebnissen zumindest eines Beschleunigungssensors (25).

8. Stabilisierungssystem nach einem der vorhergehenden Ansprüche, **dadurch gekennzeichnet, dass** ein Satz an Grenzwerten zur Beschränkung oder Steuerung der Bremsaktuator-Betätigung einen Kraftbeschränkungs-Grenzwert und/oder einen Dynamikbeschränkungs-Grenzwert umfasst.

9. Stabilisierungssystem nach einem der vorhergehenden Ansprüche, **dadurch gekennzeichnet, dass** das Stabilisierungssystem zwei oder mehr vordefinierte Sätze an Auslöse-Grenzwerten für das Auslösen einer Betätigung des Bremsaktuators (23) aufweist.

10. Stabilisierungssystem nach einem der vorhergehenden Ansprüche, **dadurch gekennzeichnet, dass** das Stabilisierungssystem dazu ausgebildet ist, einen Satz an Auslöse-Grenzwerten und/oder einen Satz an Grenzwerten zur Beschränkung oder Steuerung der Bremsaktuator-Betätigung auf Basis der erfassten momentanen Masse und/oder Beladung des Fahrzeuganhängers (1) auszuwählen, insbesondere in Abhängigkeit von einem identifizierten Beladungs-Zustand.

11. Stabilisierungsverfahren zur Ansteuerung eines Bremsaktuators (23) eines Stabilisierungssystems, wobei der Bremsaktuator (23) Bremskräfte oder Stellbewegungen in mechanischer Überlagerung zu einer Basis-Betätigung von Radbremsen (14) eines Fahrzeuganhängers (1) erzeugt, wobei die Basis-Betätigung in Form einer Zugkraft oder Druckkraft ausgebildet ist, die über ein mechanisches Kraftleitungsmittel an die Betätigungselemente der Radbremsen geleitet wird, und wobei die überlagerte Betätigung der Anhängerbremse (14) durch mechanische Betätigungskräfte oder mechanische Stellbewegungen bewirkt wird, die von dem Bremsaktuator (23) aufgebracht werden und wobei das Stabilisierungsverfahren zumindest die folgenden Schritte umfasst:
- ein Bewegungszustand des Fahrzeuganhängers (1) wird durch einen Beschleunigungssensor (23) erfasst, wobei zumindest Bewegungs-Parameter erfasst werden, durch die ein instabiler Fahrzustand des Fahrzeuganhängers (1) erkennbar ist;
- der Bremsaktuator (23) wird zur Vermeidung oder Begrenzung von instabilen Fahrzuständen in Abhängigkeit von dem Bewegungszustand des Fahrzeuganhängers (1) betätigt;
- die momentane Masse oder Beladung des Fahrzeuganhängers (1) wird erfasst, und die Betätigung des Bremsaktuators (23) wird in Abhängigkeit von der momentanen Masse und/oder Beladung des Fahrzeuganhängers (1) gesteuert
**dadurch gekennzeichnet, dass**
- zur Erfassung der momentanen Masse und/oder Beladung des Fahrzeuganhängers (1) die Masse und/oder Beladung des Fahrzeuganhängers einmalig vor oder bei einem Fahrtbeginn oder nur gelegentlich während der Fahrt erfasst wird; UND/ODER dass
- zwei oder mehr vordefinierte Sätze an Grenzwerten zur Beschränkung oder Steuerung der Bremsaktuator-Betätigung vorgesehen sind, wobei ein geeigneter Grenzwertsatz in Abhängigkeit von der erfassten momentanen Masse und/oder Beladung des Fahrzeuganhängers ausgewählt wird.

12. Stabilisierungsverfahren nach Anspruch 11, wobei der Beschleunigungssensor (23) und ein oder mehrere Sensoren (G1, G2, G3) zur Erfassung der momentanen Masse und/oder Beladung des Fahrzeuganhängers (1) am Fahrzeuganhänger (1) angeordnet sind.

13. Stabilisierungsverfahren nach einem der Ansprüche 11 oder 12, wobei das Ansprechverhalten des Bremsaktuators (12) in Abhängigkeit von der ermittelten momentanen Masse und/oder Beladung des Fahrzeuganhängers (1) adaptiert wird, insbesondere durch Verändern eines oder mehrerer Auslöse-Grenzwerte für das Auslösen eines überlagerten Bremseingriffs.

14. Stabilisierungsverfahren nach einem der vorhergehenden Ansprüche, wobei die Intensität eines Bremseingriffs durch den Bremsaktuator (12) in Abhängigkeit von der ermittelten momentanen Masse und/oder Beladung des Fahrzeuganhängers (1) verändert wird, insbesondere durch Vorsehen oder Adaptieren eines Kraftbeschränkungs-Grenzwerts für die Begrenzung des Bremseingriffs;

15. Softwareprodukt umfassend eine Steuerungssoftware für ein Stabilisierungssystem eines Fahrzeuganhängers (1), **dadurch gekennzeichnet, dass** das Softwareprodukt Anweisungen umfasst, die bei Ausführung in einer Steuerungseinheit ein Stabilisierungsverfahren gemäß einem der Ansprüche 11 bis 14 umsetzen.

## Claims

1. Stabilizing system for a vehicle trailer (1), comprising
- a brake actuator (23) for the superimposed mechanical activation of at least one trailer brake (14) while superimposing a basic activation by an overrun installation (18), wherein the basic activation is configured in the form of a tensile force or compressive force which by way of a mechanical force-transmission system is directed to the activation elements of the wheel brakes, and wherein the superimposed activation of the trailer brake (14) is caused by mechanical activation forces or mechanical actuation movements which are applied by the brake actuator (23) ;
- a control unit (24) for activating the brake actuator (23) as a function of a moving state of the vehicle trailer (1) that for avoiding or delimiting unstable travelling states is detected in a sensory manner;
- wherein the stabilizing system comprises an acceleration sensor for detecting movement parameters by way of which an unstable travelling state is identifiable;
**characterized in that**
the stabilizing system for detecting the momentary mass and/or load of the vehicle trailer (1) has one or a plurality of sensors (G1, G2, G3) and is configured for controlling the activation of the brake actuator (23) as a function of the momentary mass and/or load of the vehicle trailer (1), and **in that**
- for detecting the momentary mass and/or load of the vehicle trailer (1), the mass and/or load of the vehicle trailer is detected once prior to or when commencing travel, or only occasionally during the travel; AND/OR **in that**
- the stabilizing system has two or more predefined sets of limit values for delimiting or controlling the brake actuator activation, wherein the stabilizing system is configured for selecting a suitable set of limit values as a function of the detected momentary mass and/or load of the vehicle trailer.

2. Stabilizing system according to Claim 1, **characterized in that** the stabilizing system is configured for determining an absolute mass of the vehicle trailer (1), and/or for determining a position of the centre of gravity of the vehicle trailer (1) and/or of the load, and/or for determining a moment of inertia of the vehicle trailer (1).

3. Stabilizing system according to one of the preceding claims, **characterized in that** the stabilizing system is configured for adapting the response behaviour of the brake actuator (23), in particular for varying one or a plurality of trigger limit values for triggering a superimposed braking intervention, as a function of the determined momentary mass and/or load of the vehicle trailer (1) .

4. Stabilizing system according to one of the preceding claims, **characterized in that** the stabilizing system is configured for varying the intensity of a braking intervention as a function of the determined momentary mass and/or load of the vehicle trailer (1), in particular for providing or adapting a force restriction limit value for delimiting the braking intervention.

5. Stabilizing system according to one of the preceding claims, **characterized in that** the stabilizing system is configured for restricting the dynamics of a braking intervention, in particular for providing or adapting a dynamics restriction limit value, as a function of the determined momentary mass and/or load of the trailer vehicle.

6. Stabilizing system according to one of the preceding claims, **characterized in that** the momentary mass and/or load of the vehicle trailer (1) in temporal terms is determined prior to a braking intervention.

7. Stabilizing system according to one of the preceding claims, **characterized in that** the mass and/or load of the vehicle trailer (1) is detected directly, in particular by one or a plurality of weight sensors (G1, G2, G3), or **in that** the mass and/or load of the vehicle trailer (1) is detected indirectly, in particular by comparing the measured results of one or a plurality of force or weight sensors (G1, G2, G3) with the measured results of at least one acceleration sensor (25).

8. Stabilizing sensor according to one of the preceding claims, **characterized in that** a set of limit values for restricting or controlling the brake actuator activation comprises a force restriction limit value and/or a dynamics restriction limit value.

9. Stabilizing system according to one of the preceding claims, **characterized in that** the stabilizing system has two or more predefined sets of trigger limit values for triggering an activation of the brake actuator (23).

10. Stabilizing system according to one of the preceding claims, **characterized in that** the stabilizing system is configured for selecting a set of trigger limit values and/or a set of limit values for restricting or controlling the brake actuator activation based on the detected momentary mass and/or load of the vehicle trailer (1), in particular as a function of an identified loading state.

11. Stabilizing method for actuating a brake actuator (23) of a stabilizing system, wherein the brake actuator (23) generates brake forces or actuation movements in mechanical superimposition to a basic activation of wheel brakes (14) of a vehicle trailer (1), wherein the basic activation is configured in the form of a tensile force or compressive force which by way of a mechanical force transmission system is directed to the activation elements of the wheel brakes, and wherein the superimposed activation of the trailer brake (14) is caused by mechanical activation forces or mechanical actuation movements which are applied by the brake actuator (23), and wherein the stabilizing method comprises at least the following steps:
- a moving state of the vehicle trailer (1) is detected by an acceleration sensor (23), wherein at least movement parameters are detected, by way of which an unstable travelling state of the vehicle trailer (1) is identifiable;
- the brake actuator (23) for avoiding or delimiting unstable travelling states is activated as a function of the moving state of the vehicle trailer (1);
- the momentary mass or load of the vehicle trailer (1) is detected, and the activation of the brake actuator (23) is controlled as a function of the momentary mass and/or load of the vehicle trailer (1) ;
**characterized in that**
- for detecting the momentary mass and/or load of the vehicle trailer (1), the mass and/or load of the vehicle trailer is detected once prior to or when commencing travel, or only occasionally during travel; AND/OR **in that**
- two or more predefined sets of limit values for restricting or controlling the brake actuator activation are provided, wherein a suitable set of limit values is selected as a function of the detected momentary mass and/or load of the vehicle trailer.

12. Stabilizing method according to Claim 11, wherein the acceleration sensor (23) and one or a plurality of sensors (G1, G2, G3) for detecting the momentary mass and/or load of the vehicle trailer (1) are disposed on the vehicle trailer (1).

13. Stabilizing method according to one of Claims 11 or 12, wherein the response behaviour of the brake actuator (12) is adapted as a function of the determined momentary mass and/or load of the vehicle trailer (1), in particular by varying one or a plurality of trigger limit values for triggering a superimposed braking intervention.

14. Stabilizing method according to one of the preceding claims, wherein the intensity of a braking intervention by the brake actuator (12) is varied as a function of the determined momentary mass and/or load of the vehicle trailer (1), in particular by providing or adapting a force restriction limit value for restricting the brake intervention.

15. Software product comprising a control software for a stabilizing system of a vehicle trailer (1), **characterized in that** the software product comprises instructions which, when executed in a control unit, implement a stabilizing method according to one of Claims 11 to 14.

## Revendications

1. Système de stabilisation pour une remorque (1) de véhicule, comprenant :
- un actionneur de freinage (23) qui peut actionner mécaniquement un ou plusieurs freins (14) de la remorque en superposition mécanique à un actionnement de base, l'actionnement de base présentant la forme d'une force de traction ou d'une force de poussée appliquées sur les éléments d'actionnement des freins de roue par l'intermédiaire d'un moyen mécanique d'application de force, l'actionnement superposé des freins (14) de la remorque étant obtenu par des forces mécaniques d'actionnement ou par des déplacements mécaniques de réglage qu'applique l'actionneur de freinage (23),
- une unité de commande (24) qui peut actionner l'actionneur de freinage (23) en fonction de l'état de déplacement, détecté par des capteurs, de la remorque (1) du véhicule en vue d'éviter ou de limiter des instabilités de roulage,
- le système de stabilisation comprenant un capteur d'accélération qui saisit des paramètres de déplacement qui permettent de détecter une instabilité de roulage, **caractérisé en ce que**
le système de stabilisation présente un ou plusieurs capteurs (G1, G2, G3) qui saisissent la masse et/ou la charge instantanées de la remorque (1) du véhicule et est configuré pour commander l'actionnement par l'actionneur de freinage (23) en fonction de la masse et/ou de la charge de la remorque (1) du véhicule,
**en ce que** pour saisir la masse et/ou la charge instantanées de la remorque (1) du véhicule, la masse et/ou la charge de la remorque (1) du véhicule sont saisies une fois avant ou au début d'un déplacement ou uniquement occasionnellement pendant le déplacement ET/OU
**en ce que** le système de stabilisation présente deux ou plusieurs jeux prédéfinis de valeurs limites qui restreignent ou commandent l'actionnement de l'actionneur de freinage, le système de stabilisation étant configuré pour sélectionner un jeu approprié de valeurs limites en fonction de la masse et/ou de la charge de la remorque (1) du véhicule.

2. Système de stabilisation selon la revendication 1, **caractérisé en ce que** le système de stabilisation est configuré pour déterminer la masse absolue de la remorque (1) du véhicule, la position du centre de masse de la remorque (1) du véhicule, la charge et/ou le moment d'inertie de la remorque (1) du véhicule.

3. Système de stabilisation selon l'une des revendications précédentes, **caractérisé en ce que** le système de stabilisation est configuré pour adapter le comportement de réponse de l'actionneur de freinage (23) et en particulier sélectionner une ou plusieurs valeurs limites de déclenchement de la superposition d'une action de freinage en fonction de la masse et/ou de la charge de la remorque (1) du véhicule qui ont été déterminées.

4. Système de stabilisation selon l'une des revendications précédentes, **caractérisé en ce que** le système de stabilisation est configuré pour modifier l'intensité d'une action de freinage et en particulier pour prévoir ou adapter une valeur limite de restriction de force en vue de restreindre l'action de freinage en fonction de la masse et/ou de la charge de la remorque (1) du véhicule qui ont été déterminées.

5. Système de stabilisation selon l'une des revendications précédentes, **caractérisé en ce que** le système de stabilisation est configuré pour restreindre la dynamique d'une action de freinage et en particulier pour prévoir ou adapter une valeur limite de dynamique en vue de restreindre l'action de freinage en fonction de la masse et/ou de la charge de la remorque (1) du véhicule qui ont été déterminées.

6. Système de stabilisation selon l'une des revendications précédentes, **caractérisé en ce que** la masse et/ou la charge de la remorque (1) du véhicule sont déterminées avant une action de freinage.

7. Système de stabilisation selon l'une des revendications précédentes, **caractérisé en ce que** la masse et/ou la charge de la remorque (1) du véhicule sont déterminées directement, en particulier par un ou plusieurs capteurs de poids (G1, G2, G3), ou **en ce que** la masse et/ou la charge de la remorque (1) du véhicule sont déterminées indirectement, en particulier par comparaison des résultats de mesure d'un ou de plusieurs capteurs de poids (G1, G2, G3) avec les résultats de mesure d'un ou de plusieurs capteurs d'accélération (25).

8. Système de stabilisation selon l'une des revendications précédentes, **caractérisé en ce qu'**un jeu de valeurs limites permettant de restreindre et/ou de commander l'actionnement de l'actionneur de freinage comprend une valeur limite de restriction de force et/ou une valeur limite de restriction de dynamique.

9. Système de stabilisation selon l'une des revendications précédentes, **caractérisé en ce que** le système de stabilisation présente deux ou plusieurs jeux prédéfinis de valeurs limites de déclenchement pour le déclenchement d'un actionnement de l'actionneur de freinage (23).

10. Système de stabilisation selon l'une des revendications précédentes, **caractérisé en ce que** le système de stabilisation est configuré pour sélectionner un jeu de valeurs limites de déclenchement et/ou un jeu de valeurs limites de restriction ou de commande de l'actionnement de l'actionneur de freinage sur la base de la masse et/ou de la charge de la remorque (1) du véhicule, en particulier en fonction de l'état de charge qui a été identifié.

11. Procédé de stabilisation permettant de commander l'actionneur de freinage (23) d'un système de stabilisation, dans lequel l'actionneur de freinage (23) forme des forces de freinage ou des déplacements de réglage en superposition mécanique à un actionnement de base des plusieurs freins (14) de la remorque d'une remorque (1) du véhicule, l'actionnement de base présentant la forme d'une force de traction ou d'une force de poussée appliquées sur les éléments d'actionnement des freins de roue par l'intermédiaire d'un moyen mécanique d'application d'une force, l'actionnement superposé des plusieurs freins (14) de la remorque étant obtenu par des forces mécaniques d'actionnement ou par des déplacements mécaniques de réglage qu'applique l'actionneur de freinage (23),
le procédé de stabilisation présentant une ou plusieurs des étapes suivantes :
- l'état de déplacement de la remorque (1) du véhicule est saisi par un capteur d'accélération (25), les paramètres de déplacement saisis permettant de détecter une instabilité de roulage de la remorque (1) du véhicule,
- l'actionneur de freinage (23) est actionné en vue d'éviter ou de restreindre les instabilités de roulage en fonction de l'état de déplacement de la remorque (1) du véhicule,
- la masse ou la charge instantanées de la remorque (1) du véhicule sont saisies et l'actionnement de l'actionneur de freinage (23) est commandé en fonction de la masse ou de la charge instantanées de la remorque (1) du véhicule,
**caractérisé en ce que**
- pour saisir la masse ou la charge instantanées de la remorque (1) du véhicule, la masse et/ou la charge de la remorque (1) du véhicule sont saisies une fois avant ou au début d'un déplacement ou uniquement occasionnellement pendant le déplacement ET/OU
**en ce que** deux ou plusieurs jeux prédéfinis de valeurs limites qui restreignent ou commandent l'actionnement de l'actionneur de freinage sont prévus, un jeu approprié de valeurs limites étant sélectionné en fonction de la masse et/ou de la charge de la remorque (1) du véhicule.

12. Procédé de stabilisation selon la revendication 11, dans lequel un ou plusieurs capteurs (G1, G2, G3) qui saisissent la masse et/ou la charge instantanées de la remorque (1) du véhicule sont prévus sur la remorque (1) du véhicule.

13. Procédé de stabilisation selon l'une des revendications 11 ou 12, dans lequel le comportement de réponse de l'actionneur de freinage (23) est adapté en fonction de la masse et/ou de la charge de la remorque (1) du véhicule, en particulier par modification d'une ou plusieurs valeurs limites de déclenchement pour le déclenchement de la superposition d'une action de freinage.

14. Procédé de stabilisation selon l'une des revendications précédentes, dans lequel l'intensité d'une action de freinage par l'actionneur de freinage (23) est modifiée en fonction de la masse et/ou de la charge instantanées de la remorque (1) du véhicule qui ont été déterminées, en particulier en prévoyant ou en adaptant une valeur limite de restriction de force en vue de restreindre l'action de freinage.

15. Produit logiciel comprenant un logiciel de commande d'un système de stabilisation d'une remorque (1) du véhicule, **caractérisé en ce que** le produit logiciel comporte des instructions qui permettent de mettre en oeuvre un procédé de stabilisation selon l'une des revendications 11 à 14 lorsqu'elles sont exécutées sur une unité de commande.
